# EUROPEAN PATENT SPECIFICATION

(11) **EP 4 061 034 B1**
(45) Date of publication and mention of the grant of the patent: **12.03.2025**
(21) Application number: 19952693.0
(22) Date of filing: 15.11.2019
(51) Int. Cl.: H04W 8/24

(54) **TERMINAL AND COMMUNICATION METHOD**
ENDGERÄT UND KOMMUNIKATIONSVERFAHREN
TERMINAL ET PROCÉDÉ DE COMMUNICATION

(43) Date of publication of application: 21.09.2022
(73) Proprietor: NTT DOCOMO, INC., Chiyoda-Ku Tokyo 100-6150 (JP)
(72) Inventor: TAKAHASHI, Hideaki, Tokyo 100-6150 (JP); HANAKI, Akihito, Tokyo 100-6150 (JP); MATSUMURA, Yuki, Tokyo 100-6150 (JP)
(74) Representative: Hoffmann Eitle
(86) International application number: PCT/JP2019/044948
(87) International publication number: WO 2021/095258

(56) References cited:
- US-A1- 2016 262 118
- HUAWEI ET AL: "CR on CSI UE capabilities parameters (38.306)", vol. RAN WG2, no. Reno, Nevada, US; 20191118 - 20191122, 8 November 2019 (2019-11-08), XP051817473, Retrieved from the Internet <URL:https://ftp.3gpp.org/tsg_ran/WG2_RL2/TSGR2_108/Docs/R2-1915904.zip R2-1915904 CR on CSI UE capabilities parameters (38.306).docx> [retrieved on 20191108]
- ERICSSON: "On CSI enhancements for MU-MIMO", 3GPP TSC RAN WG1 #99 R1-1912662, 8 November 2019 (2019-11-08), XP051820156
- NTT DOCOMO, INC.: "D.012][D.013][H.040][E.228] Class 4 issues on enhanced CA band combination retrieval", 3GPP TSG-RAN WG2#93 R2-161629, 19 February 2016 (2016-02-19), XP051055457
- NTT DOCOMO, INC.: "Alternative solution for ''under- reporting'' CSI-RS capabilities", 3GPP TSG RAN WG2 #108 R2-1916277, 23 November 2019 (2019-11-23), XP051828806

## Description

### TECHNICAL FIELD

The present invention relates to a terminal, a base station and a communication method in a radio communication system.

### BACKGROUND ART

In NR (New Radio) (also referred to as "5G") that is a successor system to LTE (Long Term Evolution), a technology satisfying a large-capacity system, a high-speed data transmission rate, low delay, simultaneous connection of a large number of terminals, low cost, power saving, and the like as requirements has been discussed (for example, Non-Patent Document 1).

In the LTE system or the NR system, the network makes an inquiry to a UE (User Equipment), and acquires information related to the radio access capability of the UE (for example, Non-Patent Document 2). The radio access capability of the UE includes, for example, a supported maximum data rate, a layer 2 total buffer size, a supported band combination, a parameter related to a PDCP (Packet Data Convergence Protocol) layer, a parameter related to an RLC (Radio Link Control) layer, a parameter related to an MAC (Medium Access Control) layer, and a parameter related to a physical layer (for example, Non-Patent Document 3).

In a conventional NR system, CodebookParameters for reporting the MIMO capability supported by the terminal to the network are defined (for example, Non-Patent Document 2). In the CodebookParameters, capabilities for four types of codebooks of type I single panel, type I multi-panel, type II, and type II port selection are specified. For each of the four types of codebooks, the corresponding CSI-RS resource is reported from the terminal. The corresponding CSI-RS resource is configured by three capability values of the maximum number of base station transmission ports per CSI-RS resource (maxNumberTxPortsPerResource), the maximum number of CSI-RS resources per frequency band (maxNumberResourcesPerBand), and the total number of base station transmission ports per frequency band (totalNumberTxPortsPerBand). The CodebookParameters can be reported for each frequency supported by the terminal, and can have capabilities related to different CodebookParameters in different frequency bands.

The maximum number of CSI-RS resources per frequency band (maxNumberResourcesPerBand) and the total number of base station transmission ports per frequency band (totalNumberTxPortsPerBand) can also be reported for each band combination (Band combination) supported by the UE. maxNumberSimultaneousNZP-CSI-RS-ActBWP-AllCC defines the maximum number of CSI-RS resources among all the component carriers in the band combination, and the totalNumberPortsSimultaneousNZP-CSI-RS-ActBWP-AllCC defines the total number of base station transmission ports among all the component carriers in the band combination. The capability values at these band combination levels are specified assuming that there is a limit because it is not possible to support CodebookParameters defined for each frequency for a given band combination.

For example, when the terminal supports 8 CSI-RS resources for frequency band A and 8 CSI-RS resources for frequency band B, 8 + 8 = 16 CSI-RS resources are supported for the band combination of frequency bands A and B. However, when the frequency bands A and B are combined, the capability values of the respective frequency bands may not be directly supported due to the restriction of the processing capability of the terminal. For example, when only a total of 8 CSI-RS resources can be supported, 8 CSI-RS resources are reported in maxNumberSimultaneousNZP-CSI-RS-ActBWP-AllCC defined by the band combination level. In this case, within a range not exceeding the total number of 8 CSI-RS resources, the network configures the CSI-RS resource in the carriers of the frequency band A and the frequency band B for the terminal. For example, the CSI-RS resource is configured within a range not exceeding the maximum value for each frequency band and the total value of the band combination, such as (Band A, Band B) = (8,0), (7,1).

### CITATION LIST

US 2016/262118 A1 relates to method for a terminal in a wireless communication system supporting carrier aggregation and including receiving a control message including indication information, the indication information indicating that physical uplink control channel feedback for at least one secondary cell is transmitted on a SCell; identifying whether the SCell is configured to the terminal and is activated and if the SCell is configured to the terminal and is activated, obtaining Type 2 power headroom information for the SCell.

### NON-PATENT DOCUMENT

Non-Patent Document 1: 3GPP TS 38.300 V15.7.0 (2019-09)
Non-Patent Document 2: 3GPP TS 38.331 V15.7.0 (2019-09)
Non-Patent Document 3: 3GPP TS 38.306 V15.7.0 (2019-09)

HUAWEI ET AL: "CR on CSI UE capabilities parameters (38.306)", 3GPP DRAFT; R2-1915904 ; relates to Carrier Reconfiguration on CSI UE capabilities parameters.

### SUMMARY OF THE INVENTION

### PROBLEM TO BE SOLVED BY THE INVENTION

In the related art, when the network acquires information on the radio access capability of the terminal, the range covered by the radio access capability of the terminal reported for each band combination was unclear in some cases. Specifically, the maximum number of CSI-RS resources among all the component carriers (maxNumberSimultaneousNZP-CSI-RS-ActBWP-AllCC) and the total number of base station transmission ports among all the component carriers (totalNumberPortsSimultaneousNZP-CSI-RS-ActBWP-AllCC), which are reported in band combination units, are defined as the maximum number of CSI-RS resources and the total number of base station transmission ports that can be simultaneously received and processed among all the component carriers. However, it is not specified whether the definition of "can be simultaneously received and processed" is the OFDM symbol level or the radio frame slot level.

The capability value of the UE may differ depending on the definition of simultaneous reception. For example, in the example described in the background art, when performing simultaneous reception and processing at the OFDM symbol/radio frame slot level, only a maximum of 8 CSI-RS resources can be supported among all the component carriers of the band combination. However, when performing simultaneous reception and processing by Time Division Multiplexing (TDM) based on time shifting, it is possible to support up to a maximum value for each band. Therefore, a total of 16 CSI-RS resources can be supported in some cases. However, it is not possible to perform capability value report in consideration of the difference in the CSI-RS resource reception and processing timing with the conventional information on the radio access capability.

The invention has been made in view of the above points, and it is an object of the invention to clarify the target range of a report regarding a terminal capability in a radio communication system.

### MEANS FOR SOLVING PROBLEM

The object of the invention is achieved by the subject-matter of the independent claims. Further examples are provided for facilitating the understanding of the invention.

According to the present disclosure, there is provided a terminal including: a receiving unit that receives a message requesting a report of a terminal capability, from a base station; a control unit that includes, in a message reporting the terminal capability, a terminal capability that is related to measurement using a reference signal for acquiring information regarding a channel state, for each of band combinations that are selected from a plurality of bands that are terminal capability report targets included in the message requesting the report of the terminal capability; and a transmitting unit that transmits the message reporting the terminal capability to the base station. A range of a target time domain is specified for the terminal capability related to the measurement.

### EFFECT OF THE INVENTION

According to the disclosed technology, it is possible to clarify the target range of the report regarding the terminal capability in the radio communication system.

### BRIEF DESCRIPTION OF DRAWINGS

Fig. 1 is a diagram illustrating a configuration example of a network architecture;
Fig. 2 is a diagram illustrating a configuration example of a radio communication system;
Fig. 3 is a sequence diagram for describing an example of a report regarding the terminal capability;
Fig. 4 is a flowchart for describing an example of a report regarding the terminal capability;
Fig. 5 is a diagram illustrating an example (1) of changing the specification of the report regarding the terminal capability;
Fig. 6 is a diagram illustrating an example (2) of changing the specification of the report regarding the terminal capability;
Fig. 7 is a diagram illustrating an example (3) of changing the specification of the report regarding the terminal capability;
Fig. 8 is a diagram illustrating an example of the functional configuration of a base station 10;
Fig. 9 is a diagram illustrating an example of the functional configuration of a terminal 20; and
Fig. 10 is a diagram illustrating an example of the hardware configuration of the base station 10 or the terminal 20.

### MODE(S) FOR CARRYING OUT THE INVENTION

Hereinafter, an embodiment of the invention will be described with reference to the diagrams.

In the operation of the radio communication system, known technology is appropriately used. However, the known technology is, for example, existing LTE, but is not limited to the existing LTE.

In addition, the term "LTE" used in this specification has a broad meaning including LTE-Advanced and systems (for example, NR) after LTE-Advanced unless otherwise specified.

In addition, terms such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), and PUSCH (Physical Uplink Shared Channel) used in the existing LTE are used. This is for convenience of description, and signals, functions, and the like similar to these may be called other names. In addition, the above-described terms in NR correspond to NR-SS, NR-PSS, NR-SSS, NR-PBCH, NR-PRACH, NR-PDCCH, NR-PDSCH, NR-PUCCH, NR-PUSCH, and the like. However, even a signal used in NR is not necessarily expressed as "NR-".

In addition, a duplex system may be a TDD (Time Division Duplexing) system, an FDD (Frequency Division Duplexing) system, or any other system (for example, Flexible Duplexing).

In addition, "Configure" a radio parameter or the like may mean Pre-configure a predetermined value or Configure a radio parameter notified from a base station 10 or a terminal 20.

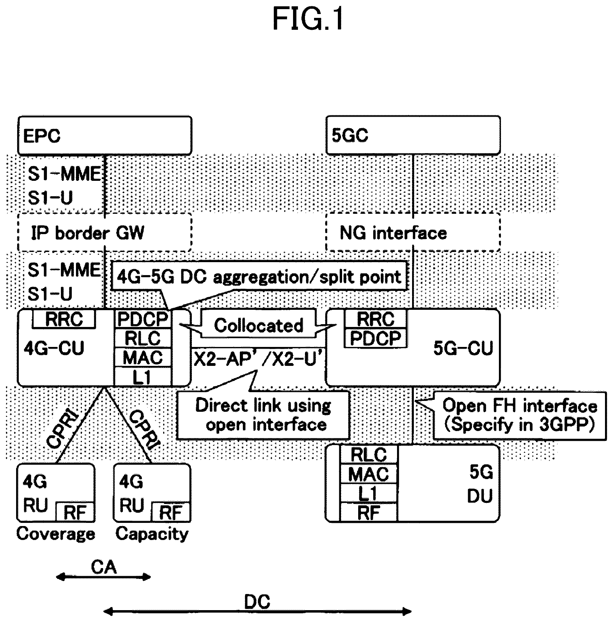

Fig. 1 is a diagram illustrating a configuration example of a network architecture.

As illustrated in Fig. 1, the radio network architecture includes a 4G-CU, a 4G-RU (Remote Unit, remote radio station), an EPC (Evolved Packet Core), and the like on the LTE-Advanced side. The radio network architecture includes a 5G-CU, a 5G-DU, and the like on the 5G side.

As illustrated in Fig. 1, the 4G-CU includes RRC (Radio Resource Control), PDCP (Packet Data Convergence Protocol), RLC (Radio Link Control), MAC (Medium Access Control), and layers up to L1 (layer 1, PHY layer or physical layer), and is connected to the 4G-RU through a CPRI (Common Public Radio Interface). A network node including the 4G-CU and the 4G-RU is referred to as an eNB.

On the other hand, on the 5G side, as illustrated in Fig. 1, the 5G-CU includes an RRC layer, and is connected to the 5G-DU through an FH (Flonthaul) interface and is connected to a 5GC (5G Core Network) through an NG interface. In addition, the 5G-CU is connected to the 4G-CU by an X2 interface. The PDCP layer in the 4G-CU serves as a coupling or separation point when performing DC (Dual Connectivity) of 4G-5G, that is, EN-DC (E-UTRA-NR Dual Connectivity). A network node including the 5G-CU and the 5G-DU is referred to as a gNB. In addition, the 5G-CU may be called a gNB-CU, and the 5G-DU may be called a gNB-DU.

In addition, as illustrated in Fig. 1, CA (Carrier Aggregation) is performed between the 4G-RUs, and DC is performed between the 4G-RU and the 5G-DU. Although not illustrated, a UE (User Equipment) is wirelessly connected through the RF of the 4G-RU or the 5G-DU and transmits and receives a packet.

In addition, Fig. 1 illustrates a radio network architecture at the time of DC, that is, EN-DC (E-UTRA-NR Dual Connectivity) of LTE-NR. However, a similar radio network architecture may be used when separating the 4G-CU into CU-DU or in the case of NR stand-alone operation. When the 4G-CU is separated into the CU-DU, the functions related to the RRC layer and the PDCP layer may be moved to the 4G-CU, and layers below the RLC layer may be included in the 4G-DU. In addition, the data rate of the CPRI may be reduced by CU-DU separation.

In addition, a plurality of 5G-DUs may be connected to the 5G-CU. In addition, NR-DC (NR-NR Dual Connectivity) may be performed by connecting the UE to a plurality of 5G-CUs, or the NR-DC may be performed by connecting the UE to a plurality of 5G-DUs and a single 5G-CU. In addition, the 5G-CU may be directly connected to the EPC without the 4G-CU interposed therebetween, and the 4G-CU may be directly connected to the 5GC without the 5G-CU interposed therebetween.

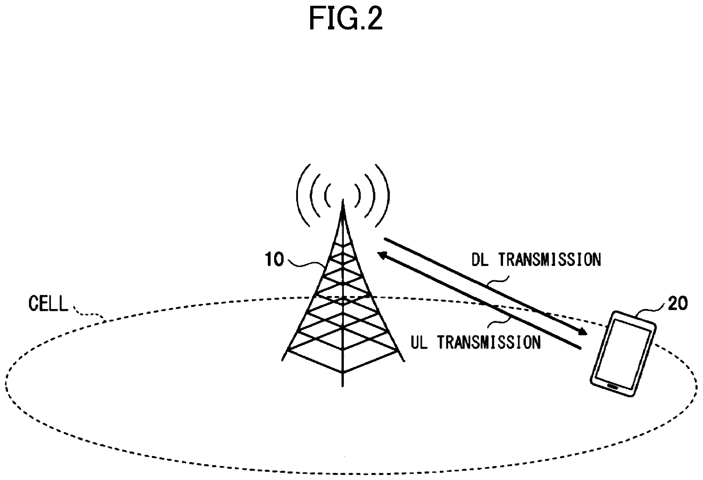

Fig. 2 is a diagram describing a radio communication system. As illustrated in Fig. 2, the radio communication system includes the base station 10 and the terminal 20. Fig. 2 illustrates one base station 10 and one terminal 20, but this is an example, and a plurality of base stations 10 and a plurality of terminals 20 may be provided.

The base station 10 is a communication device that provides one or more cells and performs radio communication with the terminal 20. The physical resource of a radio signal is defined in a time domain and a frequency domain, and the time domain may be defined by the number of OFDM symbols, and the frequency domain may be defined by the number of subcarriers or the number of resource blocks. The base station 10 transmits a synchronization signal and system information to the terminal 20. The synchronization signal may be, for example, NR-PSS and NR-SSS. The system information is transmitted through the NR-PBCH, for example, and may also be referred to as broadcast information. As illustrated in Fig. 2, the base station 10 transmits a control signal or data to the terminal 20 by DL (Downlink), and receives a control signal or data from the terminal 20 by UL (Uplink). Both the base station 10 and the terminal 20 can perform beam forming to transmit and receive signals. In addition, both the base station 10 and the terminal 20 can apply MIMO (Multiple Input Multiple Output) communication to DL or UL. In addition, both the base station 10 and the terminal 20 may communicate with each other through SCell (Secondary Cell) and PCell (Primary Cell) by CA (Carrier Aggregation).

The terminal 20 is a communication device having a radio communication function, such as a smartphone, a mobile phone, a tablet, a wearable terminal, and a communication module for M2M (Machine-to-Machine). As illustrated in Fig. 2, the terminal 20 uses various communication services provided by the radio communication system by receiving a control signal or data from the base station 10 by DL and transmitting a control signal or data to the base station 10 by UL.

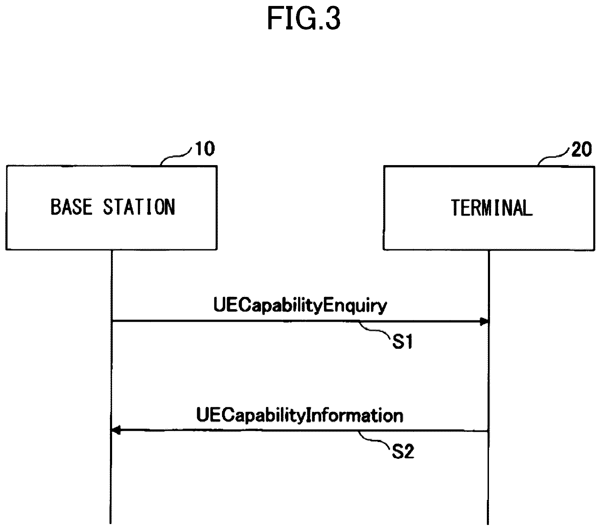

Fig. 3 is a sequence diagram for describing an example of a report regarding the terminal capability. In step S1 illustrated in Fig. 3, the base station 10 transmits "UECapabilityEnquiry", that is, a UE capability inquiry to the terminal 20. "UECapabilityEnquiry" may be an RRC message. Then, in step S2, the terminal 20 transmits "UECapabilityInformation", that is, a UE capability report, to the base station 10 for the UE capability specified by the received "UECapabilityEnquiry". The "UECapabilityInformation" may be an RRC message including the UE capabilities supported by the terminal 20. The base station 10 specifies the supported UE capability based on the received "UECapabilityInformation", and applies the supported UE capability to the radio communication with the terminal 20.

For example, "UECapabilityEnquiry" may inquire about a band combination, a feature set combination, and feature sets supported by the terminal 20. The band combination indicates a combination of bands. The feature sets are a pool that provides a plurality of sets of DL and UL parameters. The feature set combination corresponds to one element of the two-dimensional matrix of the feature set entry supported by the terminal 20.

Here, "UECapabilityEnquiry" may include a capability filter applied to the UE capability for inquiry. That is, only the UE capability specified by the capability filter included in the "UECapabilityEnquiry" may be reported in the "UECapabilityInformation". For example, the capability filter may be specified by an information element "UE-CapabilityRequestFilterCommon".

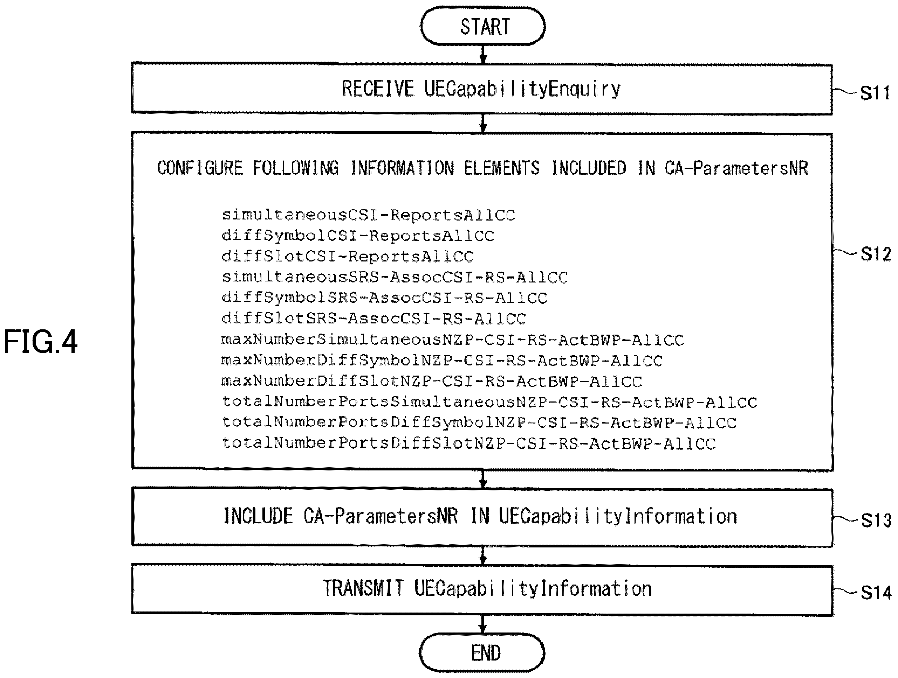

Fig. 4 is a flowchart for describing an example of a report regarding the terminal capability.

The operation of the terminal 20 in steps S1 and S2 of Fig. 3 will be described with reference to Fig. 4.

In step S11, the terminal 20 receives "UECapabilityEnquiry" from the base station 10. For example, "UECapabilityEnquiry" may include information specifying a plurality of bands that are targets of the UE capability report.

In step S12, based on "UECapabilityEnquiry", the terminal 20 configures information elements of the following 1) to 12) included in "CA-ParametersNR" for each band combination that is the target of the capability report (S12). For example, the band combination to be reported may be two bands selected from a plurality of bands that are included in "UECapabilityEnquiry", and are the target of the capability report.

1) simultaneousCSI-ReportsAllCC
2) diffSymbolCSI-ReportsAllCC
3) diffSlotCSI-ReportsAllCC
4) simultaneousSRS-AssocCSI-RS-AllCC
5) diffSymbolSRS-AssocCSI-RS-AllCC
6) diffSlotSRS-AssocCSI-RS-AllCC
7) maxNumberSimultaneousNZP-CSI-RS-ActBWP-AllCC
8) maxNumberDiffSymbolNZP-CSI-RS-ActBWP-AllCC
9) maxNumberDiffSlotNZP-CSI-RS-ActBWP-AllCC
10) totalNumberPortsSimultaneousNZP-CSI-RS-ActBWP-AllCC
11) totalNumberPortsDiffSymbolNZP-CSI-RS-ActBWP-AllCC
12) totalNumberPortsDiffSlotNZP-CSI-RS-ActBWP-AllCC

In the related art, the above information elements 1), 2), and 3) are defined as the same information element, and the time domain covered by the UE capability is unclear. Therefore, as shown in Table 1, each of the above information elements 1), 2), and 3) may be defined as a UE capability.

**[Table 1]**

| **Definitions for parameters** | **Per** | **M** | **FDD - TDD DIFF** | **FR1-FR2 DIFF** |
|---|---|---|---|---|
| ***diffSlotCSI-ReportsAllCC*** | BC | Yes | No | No |
| Indicates whether the UE supports CSI report framework and the number of CSI report (s) which the UE can simultaneously process in the same or different symbols in different slots across all CCS, and across MCG and SCG in case of NR-DC. The CSI report comprises periodic, semi-persistent and aperiodic CSI and any latency classes and codebook types. The CSI report in *diff Slot CSI-Reports AllCC* includes the beam report and CSI report. This parameter may further limit *simultaneous CSI-ReportsPerCC in MIMO-ParametersPerBand* and *Phy-ParametersFRX-Diff* for each band in a given band combination. | | | | |
| ***diffSymbolCSI-ReportsAllCC*** | BC | Yes | No | No |
| Indicates whether the UE supports CSI report framework and the number of CSI report (s) which the UE can simultaneously process in the same or different symbols in the same slot across all CCS, and across MCG and SCG in case of NR-DC. The CSI report comprises periodic, semi-persistent and aperiodic CSI and any latency classes and codebook types. The CSI report in *diffSymbolCSI-ReportsAllCC* includes the beam report and CSI report. This parameter may further limit *simultaneous CSI-ReportsPerCC in MIMO-ParametersPerBand* and *Phy-ParametersFRX-Diff* for each band in a given band combination. | | | | |
| ***simultaneousCSI-ReportsAllCC*** | BC | Yes | No | No |
| Indicates whether the UE supports CSI report framework and the number of CSI report (s) which the UE can simultaneously process within the same symbol in the same slot across all CCS, and across MCG and SCG in case of NR-DC. The CSI report comprises periodic, semi-persistent and aperiodic CSI and any latency classes and codebook types. The CSI report in *simultaneousCSI-ReportsAllCC* includes the beam report and CSI report. This parameter may further limit *simultaneousCSI-ReportsPerCC in MIMO-ParametersPerBand* and *Phy-ParametersFRX-Diff* for each band in a given band combination. | | | | |

As shown in Table 1, "simultaneousCSI-ReportsAllCC" may be defined as whether the CSI (Channel state information) report framework is supported and the number of CSI reports that can be processed simultaneously in the same symbol range in the same slot across all CCs in a given band combination. In the case of NR-DC, all CCs concerned are all CCs across MCG and SCG. The same symbol described above includes one or a plurality of symbols, and corresponds to a symbol in which the time domain position of a target symbol in a given slot is the same between bands. When there is a plurality of the same symbols, these may be continuous in the time domain or may be discontinuous in the time domain.

The CSI report may include periodic, semi-persistent, and aperiodic CSIs, latency classes, and codebook types. The CSI report targeted by "simultaneousCSI-ReportsAllCC" may include a beam report and a CSI report. The "simultaneousCSI-ReportsAllCC" may further limit the restrictions by the information elements "simultaneousCSI-ReportsPerCC" and "Phy-ParametersFRX-Diff" that limit the parameters related to the UE capability of each band in the band combination.

In addition, the CSI report framework is a capability related to the CSI supported by the terminal 20 on each carrier in a given band, and may be defined by the information element "CSI-ReportFramework". "SimultaneousCSI-ReportsPerCC" is an information element included in "MIMO-ParametersPerBand".

In addition, as shown in Table 1, "diffSymbolCSI-ReportsAllCC" may be defined as whether the CSI report framework is supported and the number of CSI reports that can be processed simultaneously in the range of the same symbol or different symbols in the same slot across all CCs in a given band combination. In the case of NR-DC, all CCs concerned are all CCs across MCG and SCG. The same symbol described above includes one or a plurality of symbols, and corresponds to a symbol in which the time domain position of a target symbol in a given slot is the same between bands. The different symbols are one or a plurality of symbols, and correspond to symbols in which the time domain position of a target symbol in a given slot is different between bands. When there are a plurality of the same symbols or different symbols, these may be continuous in the time domain or may be discontinuous in the time domain.

The CSI report may include periodic, semi-persistent, and aperiodic CSIs, latency classes, and codebook types. The CSI report targeted by "diffSymbolCSI-ReportsAllCC" may include a beam report and a CSI report. The "diffSymbolCSI-ReportsAllCC" may further limit the restrictions by the information elements "simultaneousCSI-ReportsPerCC" and "Phy-ParametersFRX-Diff" that limit the parameters related to the UE capability of each band in the band combination.

In addition, as shown in Table 1, "diffSlotCSI-ReportsAllCC" may be defined as whether the CSI report framework is supported and the number of CSI reports that can be processed simultaneously in the range of the same symbol or different symbols in different slots across all CCs in a given band combination. In the case of NR-DC, all CCs concerned are all CCs across MCG and SCG. The same symbol described above includes one or a plurality of symbols, and corresponds to a symbol in which the time domain position of a target symbol in a given slot is the same between bands. The different symbols are one or a plurality of symbols, and correspond to symbols in which the time domain position of a target symbol in a given slot is different between bands. When there are a plurality of the same symbols or different symbols, these may be continuous in the time domain or may be discontinuous in the time domain.

The CSI report may include periodic, semi-persistent, and aperiodic CSIs, latency classes, and codebook types. The CSI report targeted by "diffSlotCSI-ReportsAllCC" may include a beam report and a CSI report. The "diffSlotCSI-ReportsAllCC" may further limit the restrictions by the information elements "simultaneousCSI-ReportsPerCC" and "Phy-ParametersFRX-Diff" that limit the parameters related to the UE capability of each band in the band combination.

In addition, in the related art, the above information elements 4), 5), and 6) are defined as the same information element, and the time domain covered by the UE capability is unclear. Therefore, as shown in Table 2, each of the above information elements 4), 5), and 6) may be defined as a UE capability.

**[Table 2]**

| **Definitions for parameters** | **Per** | **M** | **FDD - TDD DIFF** | **FR1-FR2 DIFF** |
|---|---|---|---|---|
| ***diffSlotSRS-AssocCSI-RS-AllCC*** | BC | No | No | No |
| Indicates support of CSI-RS processing framework for SRS and the number of SRS resources that the UE can process simultaneously in the same or different symbols in different slots across all CCs, and across MCG and SCG in case of NR-DC, including periodic, aperiodic and semi-persistent SRS. This parameter may further limit *simultaneous SRS-AssocCSI-RS-PerCC* in *MIMO-ParametersPerBand* and *Phy-ParametersFRX-Diff* for each band in a given band combination. | | | | |
| ***diffSymbolSRS-AssocCSI-RS-AllCC*** | BC | No | No | No |
| Indicates support of CSI-RS processing framework for SRS and the number of SRS resources that the UE can process simultaneously in the same or different symbols in the same slot across all CCs, and across MCG and SCG in case of NR-DC, including periodic, aperiodic and semi-persistent SRS. This parameter may further limit *simultaneous SRS-AssocCSI-RS-PerCC* in *MIMO-ParametersPerBand* and *Phy-ParametersFRX-Diff* for each band in a given band combination. | | | | |
| ***simultaneousSRS-AssocCSI-RS-AllCC*** | BC | No | No | No |
| Indicates support of CSI-RS processing framework for SRS and the number of SRS resources that the UE can process simultaneously within the same symbol in the same slot across all CCs, and across MCG and SCG in case of NR-DC, including periodic, aperiodic and semi-persistent SRS. This parameter may further limit *simultaneous SRS-AssocCSI-RS-PerCC* in *MIMO-ParametersPerBand* and *Phy-ParametersFRX-Diff* for each band in a given band combination. | | | | |

As shown in Table 2, "simultaneousSRS-AssocCSI-RS-AllCC" may be defined as whether the CSI-RS processing framework for SRS (Sounding Reference Signal) is supported and the number of SRS resources that can be processed simultaneously in the same symbol range in the same slot across all CCs in a given band combination. In the case of NR-DC, all CCs concerned are all CCs across MCG and SCG.

The SRS may include periodic, aperiodic, and semi-persistent SRSs. The "simultaneousSRS-AssocCSI-RS-AllCC" may further limit the restrictions by the information elements "simultaneousSRS-AssocCSI-RS-PerCC" and "Phy-ParametersFRX-Diff" that limit the parameters related to the UE capability of each band in the band combination.

In addition, the framework of CSI-RS processing for the SRS is a capability related to the CSI-RS and the SRS supported by the terminal 20 on each carrier in a given band, and may be defined by the information element "CSI-RS-ProcFrameworkForSRS". In addition, "simultaneousSRS-AssocCSI-RS-PerCC" is an information element included in "MIMO-ParametersPerBand".

In addition, as shown in Table 2, "diffSymbolSRS-AssocCSI-RS-AllCC" may be defined as whether the CSI-RS processing framework for the SRS is supported and the number of SRS resources that can be processed simultaneously in the range of the same symbol or different symbols in the same slot across all CCs in a given band combination. In the case of NR-DC, all CCs concerned are all CCs across MCG and SCG.

The SRS may include periodic, aperiodic, and semi-persistent SRSs. The "diffSymbolSRS-AssocCSI-RS-AllCC" may further limit the restrictions by the information elements "simultaneousSRS-AssocCSI-RS-PerCC" and "Phy-ParametersFRX-Diff" that limit the parameters related to the UE capability of each band in the band combination.

In addition, as shown in Table 2, "diffSlotSRS-AssocCSI-RS-AllCC" may be defined as whether the CSI-RS processing framework for the SRS is supported and the number of SRS resources that can be processed simultaneously in the range of the same symbol or different symbols in different slots across all CCs in a given band combination. In the case of NR-DC, all CCs concerned are all CCs across MCG and SCG.

The SRS may include periodic, aperiodic, and semi-persistent SRSs. The "diffSlotSRS-AssocCSI-RS-AllCC" may further limit the restrictions by the information elements "simultaneousSRS-AssocCSI-RS-PerCC" and "Phy-ParametersFRX-Diff" that limit the parameters related to the UE capability of each band in the band combination.

In addition, in the related art, the above information elements 7), 8), and 9) are defined as the same information element, and the time domain covered by the UE capability is unclear. Therefore, as shown in Table 3, each of the above information elements 7), 8), and 9) may be defined as a UE capability.

**[Table 3]**

| **Definitions for parameters** | | **Per** | **M** | **FDD TDD DIF F** | **FR1 FR2 DIF F** |
|---|---|---|---|---|---|
| ***csi-RS-IM-ReceptionForFeedbackPerBandComb, csi-RS-IM-ReceptionForFeedbackPerBandComb-v15xy*** | | BC | Yes | No | No |
| Indicates support of CSI-RS and CSI-IM reception for CSI feedback. This capability signalling comprises the following parameters: | | | | | |
| | *- maxNumberSimultaneousNZP-CSI-RS-ActBWP-AIICC* indicates the maximum number of simultaneous CSI-RS resources in active BWPs within the same symbol in the same slot across all CCs, and across MCG and SCG in case of NR-DC. This parameter limits the total number of NZP-CSI-RS resources that the NW may configure across all CCs, and across MCG and SCG in case of NR-DC (irrespective of the associated codebook type). The network applies this limit in addition to the limits signalled in *MIMO-ParametersPerBand* → *maxNumberSimultaneousNZP-CSI-RS-PerCC* and in *Phy-ParametersFRX-Diff* → *maxNumberSimultaneousNZP-CSI-RS-PerCC;* | | | | |
| | *- maxNumberDiffSlotNZP-CSI-RS-ActBWP-AIICC* indicates the maximum number of simultaneous CSI-RS resources in active BWPs in the same or different symbols in different slots across all CCs, and across MCG and SCG in case of NR-DC. This parameter limits the total number of NZP-CSI-RS resources that the NW may configure across all CCs, and across MCG and SCG in case of NR-DC (irrespective of the associated codebook type). The network applies this limit in addition to the limits signalled in *MIMO-Parameters Per Band* → *maxNumberSimultaneousNZP-CSI-RS-PerCC* and in *Phy-* | | | | |
| | *ParametersFRX-Diff* → *maxNumberSimultaneousNZP-CSI-RS-PerCC;* | | | | |
| | *- maxNumberDiffSymbolNZP-CSI-RS-ActBWP-AIICC* indicates the maximum number of simultaneous CSI-RS resources in active BWPs in the same or different symbols in the same slot across all CCs, and across MCG and SCG in case of NR-DC. This parameter limits the total number of NZP-CSI-RS resources that the NW may configure across all CCs, and across MCG and SCG in case of NR-DC (irrespective of the associated codebook type). The network applies this limit in addition to the limits signalled in *MIMO-ParametersPerBand* → *maxNumberSimultaneousNZP-CSI-RS-PerCC* and in *Phy-ParametersFRX-Diff* → *maxNumberSimultaneousNZP-CSI-RS-PerCC;* | | | | |

As shown in Table 3, "maxNumberSimultaneousNZP-CSI-RS-ActBWP-AllCC" may be defined as the maximum number of simultaneous CSI-RS resources in an active BWP (Bandwidth part) in the same symbol range in the same slot across all CCs in a given band combination. In the case of NR-DC, all CCs concerned are all CCs across MCG and SCG.

"maxNumberSimultaneousNZP-CSI-RS-ActBWP-AllCC" limits the total number of NZP-CSI-RS resources configured by the network. The restriction by the information element "maxNumberSimultaneousNZP-CSI-RS-PerCC" that limits the parameters related to the UE capability of each band in the band combination may be further limited. "maxNumberSimultaneousNZP-CSI-RS-PerCC" is an information element included in "MIMO-ParametersPerBand" and "Phy-ParametersFRX-Diff".

In addition, as shown in Table 3, "maxNumberDiffSymbolNZP-CSI-RS-ActBWP-AllCC" may be defined as the maximum number of simultaneous CSI-RS resources in the active BWP in the range of the same symbol or different symbols in the same slot across all CCs in a given band combination. In the case of NR-DC, all CCs concerned are all CCs across MCG and SCG.

"maxNumberDiffSymbolNZP-CSI-RS-ActBWP-AllCC" limits the total number of NZP-CSI-RS resources configured by the network. The restriction by the information element "maxNumberSimultaneousNZP-CSI-RS-PerCC" that limits the parameters related to the UE capability of each band in the band combination may be further limited. "maxNumberSimultaneousNZP-CSI-RS-PerCC" is an information element included in "MIMO-ParametersPerBand" and "Phy-ParametersFRX-Diff".

In addition, as shown in Table 3, "maxNumberDiffSlotNZP-CSI-RS-ActBWP-AllCC" may be defined as the maximum number of simultaneous CSI-RS resources in the active BWP in the range of the same symbol or different symbols in different slots across all CCs in a given band combination. In the case of NR-DC, all CCs concerned are all CCs across MCG and SCG.

"maxNumberDiffSlotNZP-CSI-RS-ActBWP-AllCC" limits the total number of NZP-CSI-RS resources configured by the network. The restriction by the information element "maxNumberSimultaneousNZP-CSI-RS-PerCC" that limits the parameters related to the UE capability of each band in the band combination may be further limited. "maxNumberSimultaneousNZP-CSI-RS-PerCC" is an information element included in "MIMO-ParametersPerBand" and "Phy-ParametersFRX-Diff".

In addition, in the related art, the above information elements 10), 11), and 12) are defined as the same information element, and the time domain covered by the UE capability is unclear. Therefore, as shown in Table 3, each of the above information elements 10), 11), and 12) may be defined as a UE capability.

**[Table 4]**

| **Definitions for parameters** | | **Per** | **M** | **FDD TDD DIF F** | **FR1 FR2 DIF F** |
|---|---|---|---|---|---|
| ***csi-RS-IM-ReceptionForFeedbackPerBandComb, csi-RS-IM-ReceptionForFeedbackPerBandComb-v15xy*** | | BC | Yes | No | No |
| Indicates support of CSI-RS and CSI-IM reception for CSI feedback. This capability signalling comprises the following parameters: | | | | | |
| | *- totalNumberPortsSimultaneousNZP-CSI-RS-ActBWP-AIICC* indicates the total number of CSI-RS ports in simultaneous CSI-RS resources in active BWPs within the same symbol in the same slot across all CCs, and across MCG and SCG in case of NR-DC. This parameter limits the total number of ports that the NW may configure across all NZP-CSI-RS resources across all CCs, and across MCG and SCG in case of NR-DC (irrespective of the associated codebook type). The network applies this limit in addition to the limits signalled in *MIMO-ParametersPerBand* → *totalNumberPortsSimultaneousNZP-CSI-RS-PerCC* and in *Phy-ParametersFRXDiff* → *totalNumberPortsSimultaneousNZP-CSI-RS-PerCC.* | | | | |
| | *- totalNumberPortsDiffSlotNZP-CSI-RS-ActBWP-AIICC* indicates the total number of CSI-RS ports in simultaneous CSI-RS resources in active BWPs in the same or different symbols in different slots across all CCs, and across MCG and SCG in case of NR-DC. This parameter limits the total number of ports that the NW may configure across all NZP-CSI-RS resources across all CCs, and across MCG and SCG in case of NR-DC (irrespective of the associated codebook type). The network applies this limit in addition to the limits signalled in *MIMO-ParametersPerBand* → | | | | |
| | *totalNumberPortsSimultaneousNZP-CSI-RS-PerCC* and in *Phy-ParametersFRXDiff* → *totalNumberPortsSimultaneousNZP-CS-T-RS-PerCC.* | | | | |
| | *- totalNumberPortsDiffSymbolNZP-CSI-RS-ActBWP-AIICC* indicates the total number of CSI-RS ports in simultaneous CSI-RS resources in active BWPs in the same or different symbols in the same slot across all CCs, and across MCG and SCG in case of NR-DC. This parameter limits the total number of ports that the NW may configure across all NZP-CSI-RS resources across all CCs, and across MCG and SCG in case of NR-DC (irrespective of the associated codebook type). The network applies this limit in addition to the limits signalled in *MIMO-ParametersPerBand* → *totalNumberPortsSimultaneousNZP-CSI-RS-PerCC* and in *Phy-ParametersFRXDiff* → *totalNumberPortssimultaneousNZP-CSI-RS-PerCC.* | | | | |

As shown in Table 4, "totalNumberPortsSimultaneousNZP-CSI-RS-ActBWP-AllCC" may be defined as the total number of ports of simultaneous CSI-RS resources in the active BWP in the same symbol range in the same slot across all CCs in a given band combination. In the case of NR-DC, all CCs concerned are all CCs across MCG and SCG.

"totalNumberPortsSimultaneousNZP-CSI-RS-ActBWP-AllCC" limits the total number of ports of NZP-CSI-RS resources configured by the network. The restriction by the information element "totalNumberPortsSimultaneousNZP-CSI-RS-PerCC" that limits the parameters related to the UE capability of each band in the band combination may be further limited. "totalNumberPortsSimultaneousNZP-CSI-RS-PerCC" is an information element included in "MIMO-ParametersPerBand" and "Phy-ParametersFRX-Diff".

In addition, as shown in Table 4, "totalNumberPortsDiffSymbolNZP-CSI-RS-ActBWP-AllCC" may be defined as the total number of ports of simultaneous CSI-RS resources in the active BWP in the range of the same symbol or different symbols in the same slot across all CCs in a given band combination. In the case of NR-DC, all CCs concerned are all CCs across MCG and SCG.

"totalNumberPortsDiffSymbolNZP-CSI-RS-ActBWP-AllCC" limits the total number of ports of NZP-CSI-RS resources configured by the network. The restriction by the information element "totalNumberPortsSimultaneousNZP-CSI-RS-PerCC" that limits the parameters related to the UE capability of each band in the band combination may be further limited. "totalNumberPortsSimultaneousNZP-CSI-RS-PerCC" is an information element included in "MIMO-ParametersPerBand" and "Phy-ParametersFRX-Diff".

In addition, as shown in Table 4, "totalNumberPortsDiffSlotNZP-CSI-RS-ActBWP-AllCC" may be defined as the total number of ports of simultaneous CSI-RS resources in the active BWP in the range of the same symbol or different symbols in different slots across all CCs in a given band combination. In the case of NR-DC, all CCs concerned are all CCs across MCG and SCG.

"totalNumberPortsDiffSlotNZP-CSI-RS-ActBWP-AllCC" limits the total number of ports of NZP-CSI-RS resources configured by the network. The restriction by the information element "totalNumberPortsSimultaneousNZP-CSI-RS-PerCC" that limits the parameters related to the UE capability of each band in the band combination may be further limited. "totalNumberPortsSimultaneousNZP-CSI-RS-PerCC" is an information element included in "MIMO-ParametersPerBand" and "Phy-ParametersFRX-Diff".

In step S13, the terminal 20 includes "CA-ParametersNR", in which the information element is configured in step S12, in the RRC message "UECapabilityInformation". According to the present invention, "CA-ParametersNR" is "CA-ParametersNR" included in "UECapabilityInformation" based on the following inclusion relationship between the information elements.

CA-ParametersNR>BandCombination>BandCombinationList>RF-Parameters>UE-NR-Capability>UE-CapabilityRAT-Container>UE-CapabilityRAT-ContainerList>UECapabilityInformation-IEs>UECapabilityInformation.

In step S14, the terminal 20 transmits the RRC message "UECapabilityInformation" including the information element "CA-ParametersNR" to the base station 10.

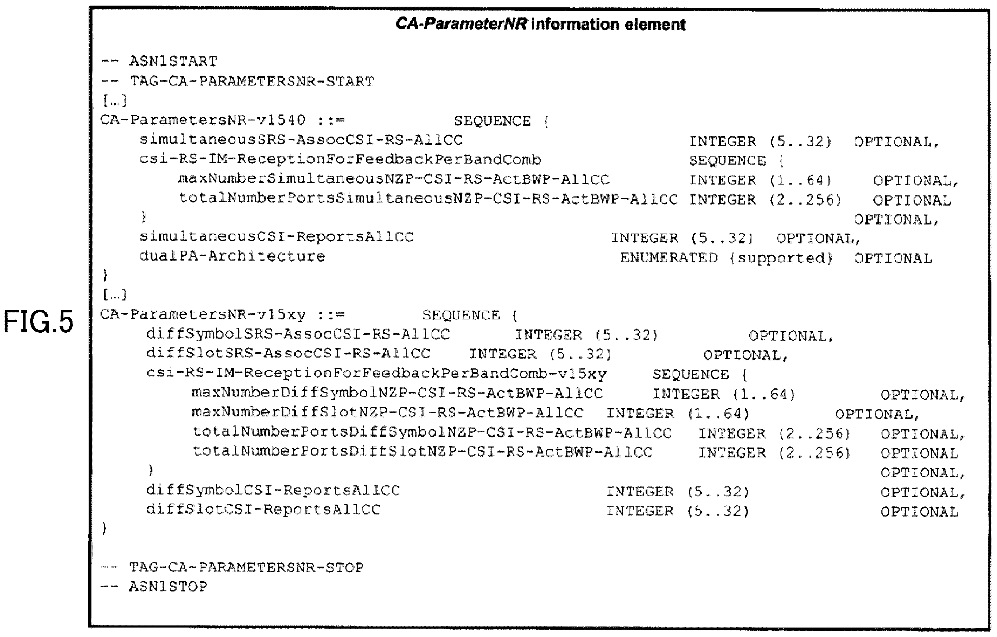

Fig. 5 is a diagram illustrating an example (1) of changing the specification of the report regarding the terminal capability.

As illustrated in Fig. 5, an integer of 5 to 32 is set for "simultaneousSRS-AssocCSI-RS-AllCC" included in "CA-ParametersNR-v1540" that has been conventionally defined, an integer of 1 to 64 is set for "maxNumberSimultaneousNZP-CSI-RS-ActBWP-AllCC", an integer of 2 to 256 is set for "totalNumberPortsSimultaneousNZP-CSI-RS-ActBWP-AllCC", and an integer of 5 to 32 is set for "simultaneousCSI-ReportsAllCC". In addition, each information element is optional, and may be configured only as needed.

In addition, an integer of 5 to 32 is set for "diffSymbolSRS-AssocCSI-RS-AllCC" included in "CA-ParametersNR-v15xy" that is newly defined, an integer of 5 to 32 is set for "diffSlotSRS-AssocCSI-RS-AllCC", an integer of 1 to 64 is set for "maxNumberDiffSymbolNZP-CSI-RS-ActBWP-AllCC", an integer of 1 to 64 is set for "maxNumberDiffSlotNZP-CSI-RS-ActBWP-AllCC", an integer of 2 to 256 is set for "totalNumberPortsDiffSymbolNZP-CSI-RS-ActBWP-AllCC", an integer of 2 to 256 is set for "totalNumberPortsDiffSlotNZP-CSI-RS-ActBWP-AllCC", an integer of 5 to 32 is set for "diffSymbolCSI-ReportsAllCC", and an integer of 5 to 32 is set for "diffSlotCSI-ReportsAllCC". In addition, each information element is optional, and may be configured only as needed.

Table 5 shows the details of the operation defined in the CA-ParametersNR field related to the information element shown in Table 1.

**[Table 5]**

| ***CA-ParametersNR field description (1)*** |
|---|
| ***diffSlotCSI-ReportsAIICC*** |
| Limits the total number of CSI reports in the same or different symbols in different slots that the NW may configure across all CCs. This parameter may further limit simultaneous CSI-Reports PerCC in MIMO-ParametersPerBand and Phy-ParametersFRX-Diff for each band in a given band combination. |
| ***diffSymbolCSI-ReportsAIICC*** |
| Limits the total number of CSI reports in the same or different symbols in the same slot that the NW may configure across all CCs. This parameter may further limit simultaneous CSI-Reports PerCC in MIMO-ParametersPerBand and Phy-ParametersFRX-Diff for each band in a given band combination. |
| ***simultaneousCSI-ReportsAIICC*** |
| Limits the total number of CSI reports within the same symbol in the same slot that the NW may configure across all CCs. This parameter may further limit simultaneous CSI-Reports PerCC in MIMO-ParametersPerBand and Phy-ParametersFRX-Diff for each band in a given band combination. |

As shown in Table 5, "simultaneousCSI-ReportsAllCC" limits the total number of CSI reports in the same symbol range in the same slot across all CCs that can be configured in the network in a given band combination. The "simultaneousCSI-ReportsAllCC" may further limit the restrictions by the information elements "simultaneousCSI-ReportsPerCC" and "Phy-ParametersFRX-Diff" that limit the parameters related to the UE capability of each band in the band combination.

In addition, as shown in Table 5, "diffSymbolCSI-ReportsAllCC" limits the total number of CSI reports in the range of the same symbol or different symbols in the same slot across all CCs that can be configured in the network in a given band combination. The "diffSymbolCSI-ReportsAllCC" may further limit the restrictions by the information elements "simultaneousCSI-ReportsPerCC" and "Phy-ParametersFRX-Diff" that limit the parameters related to the UE capability of each band in the band combination.

In addition, as shown in Table 5, "diffSlotCSI-ReportsAllCC" limits the total number of CSI reports in the range of the same symbol or different symbols in different slots across all CCs that can be configured in the network in a given band combination. The "diffSlotCSI-ReportsAllCC" may further limit the restrictions by the information elements "simultaneousCSI-ReportsPerCC" and "Phy-ParametersFRX-Diff" that limit the parameters related to the UE capability of each band in the band combination.

Table 6 shows the details of the operation defined in the CA-ParametersNR field related to the information element shown in Table 2.

**[Table 6]**

| *CA-ParametersNR **field description (2)*** |
|---|
| ***diffSlotSRS-AssocCSI-RS-AIICC*** |
| Limits the total number of SRS resources associated with CSI-RS resources in the same or different symbols in different slots that the NW may configure across all CCs. This parameter may further limit *simultaneous SRS-AssocCSI-RS-PerCC* in *MIMO-ParametersPerBand* and *Phy-ParametersFRX-Diff* for each band in a given band combination. |
| ***diffSymbolSRS-AssocCSI-RS-AIICC*** |
| Limits the total number of SRS resources associated with CSI-RS resources in the same or different in the same slot that the NW may configure across all CCs. This parameter may further limit *simultaneous SRS-AssocCSI-RS-PerCC* in *MIMO-ParametersPerBand* and *Phy-ParametersFRX-Diff* for each band in a given band combination. |
| ***simultaneousSRS-AssocCSI-RS-AIICC*** |
| Limits the total number of SRS resources associated with CSI-RS resources within the same symbol in the same slot that the NW may configure across all CCs. This parameter may further limit simultaneous *SRS-AssocCSI-RS-PerCC* in MIMO-ParametersPerBand and Phy-ParametersFRX-Diff for each band in a given band combination. |

As shown in Table 6, "simultaneousSRS-AssocCSI-RS-AllCC" limits the total number of SRS resources associated with the CSI-RS in the same symbol range in the same slot across all CCs that can be configured in the network in a given band combination. The "simultaneousSRS-AssocCSI-RS-AllCC" may further limit the restrictions by the information elements "simultaneousSRS-AssocCSI-RS-PerCC" and "Phy-ParametersFRX-Diff" that limit the parameters related to the UE capability of each band in the band combination.

In addition, as shown in Table 6, "diffSymbolSRS-AssocCSI-RS-AllCC" limits the total number of SRS resources associated with the CSI-RS in the range of the same symbol or different symbols in the same slot across all CCs that can be configured in the network in a given band combination. The "diffSymbolSRS-AssocCSI-RS-AllCC" may further limit the restrictions by the information elements "simultaneousSRS-AssocCSI-RS-PerCC" and "Phy-ParametersFRX-Diff" that limit the parameters related to the UE capability of each band in the band combination.

In addition, as shown in Table 6, "diffSlotSRS-AssocCSI-RS-AllCC" limits the total number of SRS resources associated with the CSI-RS in the range of the same symbol or different symbols in different slots across all CCs that can be configured in the network in a given band combination. The "diffSlotSRS-AssocCSI-RS-AllCC" may further limit the restrictions by the information elements "simultaneousSRS-AssocCSI-RS-PerCC" and "Phy-ParametersFRX-Diff" that limit the parameters related to the UE capability of each band in the band combination.

Table 7 shows the details of the operation defined in the CA-ParametersNR field related to the information elements shown in Table 3.

**[Table 7]**

| ***CA-ParametersNR field description (3)*** |
|---|
| ***maxNumberDiffSlotNZP-CSI-RS-ActBWP-AIICC*** |
| Limits the total number of NZP-CSI-RS resources in the same or different symbols in different slots that the NW may configure across all CCs (irrespective of the associated codebook type) The network applies this limit in addition to the limits signalled in MIMO-ParametersPerBand → *maxNumberSimultaneousNZP-CSI-RS-PerCC* and in Phy-ParametersFRX Diff → maxNumberSimultaneousNZP-CSI-RS-PerCC. |
| ***maxNumberDiffSymbolNZP-CSI-RS-ActBWP-AIICC*** |
| Limits the total number of NZP-CSI-RS resources in the same or different symbols in the same slot that the NW may configure across all CCs (irrespective of the associated codebook type) The network applies this limit in addition to the limits signalled in MIMO-ParametersPerBand → *maxNumberSimultaneousNZP-CSI-RS-PerCC* and in Phy-ParametersFRXDiff → maxNumberSimultaneousNZP-CSI-RS-PerCC. |
| ***maxNumberSimultaneousNZP-CSI-RS-ActBWP-AIICC*** |
| Limits the total number of NZP-CSI-RS resources within the same symbol in the same slot that the NW may configure across all CCs (irrespective of the associated codebook type) The network applies this limit in addition to the limits signalled in MIMO-ParametersPerBand→ *maxNumberSimultaneousNZP-CSI-RS-PerCC* and in Phy-ParametersFRXDiff → maxNumberSimultaneousNZP-CSI-RS-PerCC. |

As shown in Table 7, "maxNumberSimultaneousNZP-CSI-RS-ActBWP-AllCC" limits the total number of NZP-CSI-RS resources in the same symbol range in the same slot across all CCs that can be configured in the network in a given band combination. The "maxNumberSimultaneousNZP-CSI-RS-ActBWP-AllCC" may further limit the restrictions by the information elements "maxNumberSimultaneousNZP-CSI-RS-PerCC" and "Phy-ParametersFRX-Diff" that limit the parameters related to the UE capability of each band in the band combination.

In addition, as shown in Table 7, "maxNumberDiffSymbolNZP-CSI-RS-ActBWP-AllCC" limits the total number of NZP-CSI-RS resources in the range of the same symbol or different symbols in the same slot across all CCs that can be configured in the network in a given band combination. The "maxNumberDiffSymbolNZP-CSI-RS-ActBWP-AllCC" may further limit the restrictions by the information elements "maxNumberSimultaneousNZP-CSI-RS-PerCC" and "Phy-ParametersFRX-Diff" that limit the parameters related to the UE capability of each band in the band combination.

In addition, as shown in Table 7, "maxNumberDiffSlotNZP-CSI-RS-ActBWP-AllCC" limits the total number of NZP-CSI-RS resources in the range of the same symbol or different symbols in different slots across all CCs that can be configured in the network in a given band combination. The "maxNumberdiffSlotNZP-CSI-RS-ActBWP-AllCC" may further limit the restrictions by the information elements "maxNumberSimultaneousNZP-CSI-RS-PerCC" and "Phy-ParametersFRX-Diff" that limit the parameters related to the UE capability of each band in the band combination.

Table 8 shows the details of the operation defined in the CA-ParametersNR field related to the information elements shown in Table 4.

**[Table 8]**

| ***CA-ParametersNR field description (4)*** |
|---|
| ***totalNumberPortsDiffSlotNZP-CSI-RS-ActBWP-AIICC*** |
| Limits the total number of ports in the same or different symbols in different slots that the NW may configure across all NZP-CSI-RS resources across all CCs (irrespective of the associated codebook type). The network applies this limit in addition to the limits signalled in MIMO-ParametersPerBand → *totalNumberPortsSimultaneousNZP-CSI-RS-PerCC* and in Phy-ParametersFRXDiff → totalNumberPortsSimultaneousNZP-CSI-RS-PerCC. |
| ***totalNumberPortsDiffSymbolNZP-CSI-RS-ActBWP-AIICC*** |
| Limits the total number of ports in the same or different symbols in the same slot that the NW may configure across all NZP-CSI-RS resources across all CCs (irrespective of the associated codebook type). The network applies this limit in addition to the limits signalled in MIMO-ParametersPerBand → *totalNumberPortsSimultaneousNZP-CSI-RS-PerCC* and in Phy-ParametersFRXDiff → totalNumberPortsSimultaneousNZP-CSI-RS-PerCC. |
| ***totalNumberPortsSimultaneousNZP-CSI-RS-ActBWP-AIICC*** |
| Limits the total number of ports within the same symbol in the same slot that the NW may configure across all NZP-CSI-RS resources across all CCs (irrespective of the associated codebook type). The network applies this limit in addition to the limits signalled in MIMO-ParametersPerBand → *totalNumberPortsSimultaneousNZP-CSI-RS-PerCC* and in Phy-ParametersFRXDiff → totalNumberPortsSimultaneousNZP-CSI-RS-PerCC. |

As shown in Table 8, "totalNumberPortsSimultaneousNZP-CSI-RS-ActBWP-AllCC" limits the total number of ports of NZP-CSI-RS resources in the same symbol range in the same slot across all CCs that can be configured in the network in a given band combination. The "totalNumberPortsSimultaneousNZP-CSI-RS-ActBWP-AllCC" may further limit the restrictions by the information elements "totalNumberPortsSimultaneousNZP-CSI-RS-PerCC" and "Phy-ParametersFRX-Diff" that limit the parameters related to the UE capability of each band in the band combination.

In addition, as shown in Table 8, "totalNumberPortsDiffSymbolNZP-CSI-RS-ActBWP-AllCC" limits the total number of ports of NZP-CSI-RS resources in the range of the same symbol or different symbols in the same slot across all CCs that can be configured in the network in a given band combination. The "totalNumberPortsDiffSymbolNZP-CSI-RS-ActBWP-AllCC" may further limit the restrictions by the information elements "totalNumberPortsSimultaneousNZP-CSI-RS-PerCC" and "Phy-ParametersFRX-Diff" that limit the parameters related to the UE capability of each band in the band combination.

In addition, as shown in Table 8, "totalNumberPortsDiffSlotNZP-CSI-RS-ActBWP-AllCC" limits the total number of ports of NZP-CSI-RS resources in the range of the same symbol or different symbols in different slots across all CCs that can be configured in the network in a given band combination. The "totalNumberPortsDiffSlotNZP-CSI-RS-ActBWP-AllCC" may further limit the restrictions by the information elements "totalNumberPortsSimultaneousNZP-CSI-RS-PerCC" and "Phy-ParametersFRX-Diff" that limit the parameters related to the UE capability of each band in the band combination.

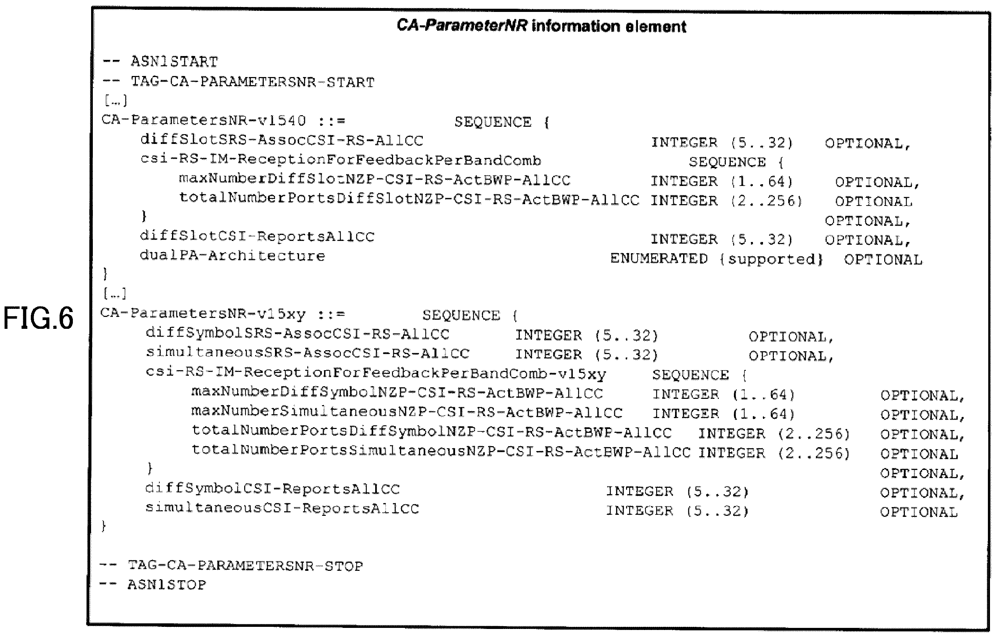

Fig. 6 is a diagram illustrating an example (2) of changing the specification of the report regarding the terminal capability. As illustrated in Fig. 6, an integer of 5 to 32 is set for "diffSlotSRS-AssocCSI-RS-AllCC" included in "CA-ParametersNR-v1540" that has been conventionally defined, an integer of 1 to 64 is set for "maxNumberDiffSlotNZP-CSI-RS-ActBWP-AllCC", an integer of 2 to 256 is set for "totalNumberPortsDiffSlotNZP-CSI-RS-ActBWP-AllCC", and an integer of 5 to 32 is set for "diffSlotCSI-ReportsAllCC". In addition, each information element is optional, and may or may not be configured.

In addition, an integer of 5 to 32 is set for "diffSymbolSRS-AssocCSI-RS-AllCC" included in "CA-ParametersNR-v15xy" that is newly defined, an integer of 5 to 32 is set for "simultaneousSRS-AssocCSI-RS-AllCC", an integer of 1 to 64 is set for "maxNumberDiffSymbolNZP-CSI-RS-ActBWP-AllCC", an integer of 1 to 64 is set for "maxNumberSimultaneousNZP-CSI-RS-ActBWP-AllCC", an integer of 2 to 256 is set for "totalNumberPortsDiffSymbolNZP-CSI-RS-ActBWP-AllCC", an integer of 2 to 256 is set for "totalNumberPortsSimultaneousNZP-CSI-RS-ActBWP-AllCC", an integer of 5 to 32 is set for "diffSymbolCSI-ReportsAllCC", and an integer of 5 to 32 is set for "simultaneousCSI-ReportsAllCC". In addition, each information element is optional, and may or may not be configured.

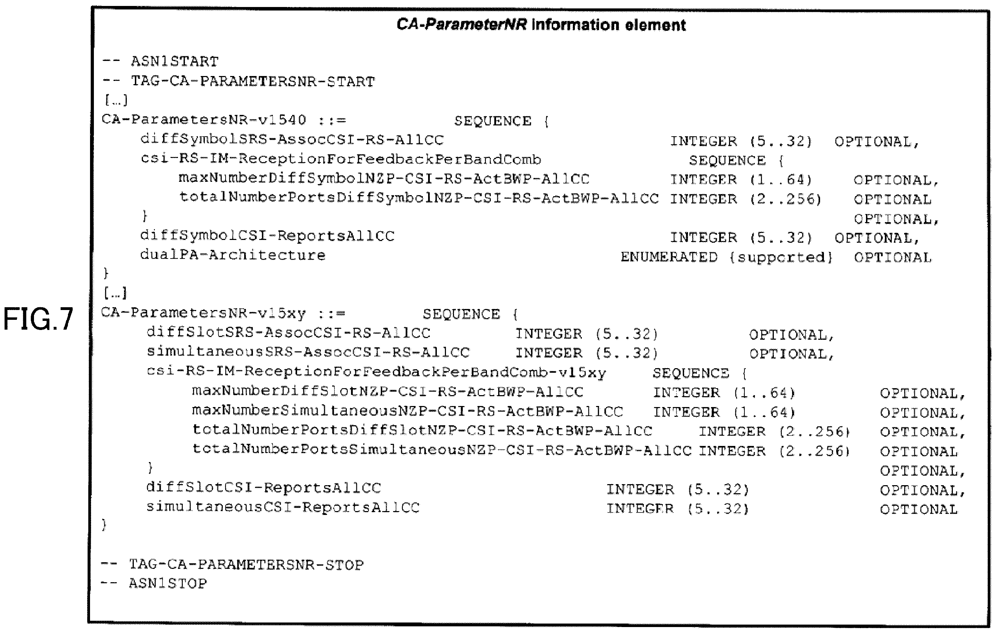

Fig. 7 is a diagram illustrating an example (3) of changing the specification of the report regarding the terminal capability. As illustrated in Fig. 7, an integer of 5 to 32 is set for "diffSymbolSRS-AssocCSI-RS-AllCC" included in "CA-ParametersNR-v1540" that has been conventionally defined, an integer of 1 to 64 is set for "maxNumberDiffSymbolNZP-CSI-RS-ActBWP-AllCC", an integer of 2 to 256 is set for "totalNumberPortsDiffSymbolNZP-CSI-RS-ActBWP-AllCC", and an integer of 5 to 32 is set for "diffSymbolCSI-ReportsAllCC". In addition, each information element is optional, and may or may not be configured.

In addition, an integer of 5 to 32 is set for "diffSlotSRS-AssocCSI-RS-AllCC" included in "CA-ParametersNR-v15xy" that is newly defined, an integer of 5 to 32 is set for "simultaneousSRS-AssocCSI-RS-AllCC", an integer of 1 to 64 is set for "maxNumberDiffSlotNZP-CSI-RS-ActBWP-AllCC", an integer of 1 to 64 is set for "maxNumberSimultaneousNZP-CSI-RS-ActBWP-AllCC", an integer of 2 to 256 is set for "totalNumberPortsDiffSlotNZP-CSI-RS-ActBWP-AllCC", an integer of 2 to 256 is set for "totalNumberPortsSimultaneousNZP-CSI-RS-ActBWP-AllCC", an integer of 5 to 32 is set for "diffSlotCSI-ReportsAllCC", and an integer of 5 to 32 is set for "simultaneousCSI-ReportsAllCC".

According to the above, the terminal 20 can report the number of CSI reports, the number of CSI-RSs, the number of ports of CSI-RS, or the number of SRSs associated with the CSI-RS, which is supported for each band combination, to the base station 10 by clarifying the target time domain.

That is, it is possible to clarify the target range of the report regarding the terminal capability in the radio communication system.

### (Device configuration)

Next, functional configuration examples of the base station 10 and the terminal 20 that execute the processes and the operations described so far will be described. The base station 10 and the terminal 20 have functions for implementing the above. However, each of the base station 10 and the terminal 20 may also have only a subset of the functions.

### <Base station 10>

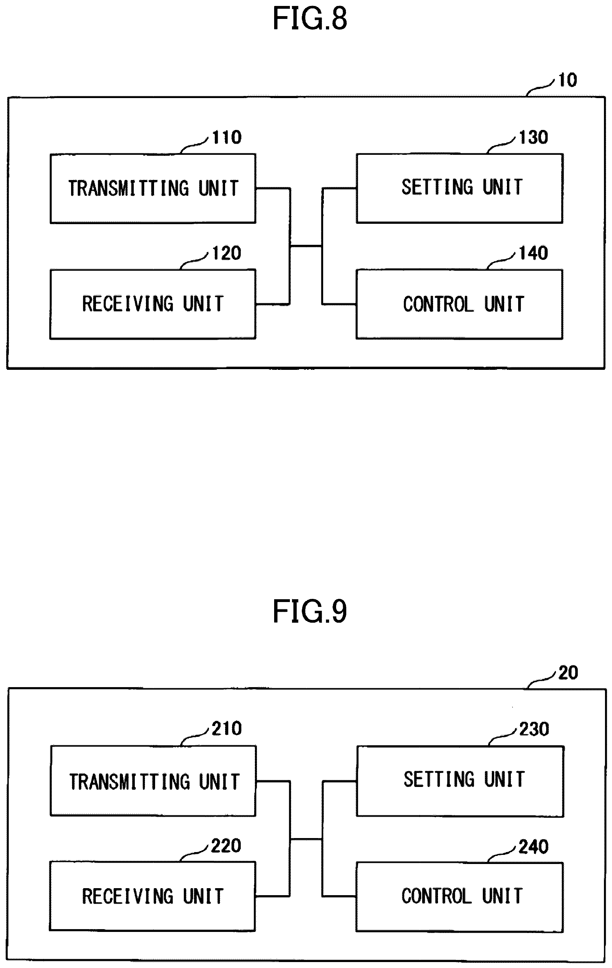

Fig. 8 is a diagram illustrating an example of the functional configuration of the base station 10.

As illustrated in Fig. 8, the base station 10 includes a transmitting unit 110, a receiving unit 120, a setting unit 130, and a control unit 140. The functional configuration illustrated in Fig. 8 is merely an example. As long as the operation can be performed, any functional division and any name of each functional unit may be applied.

The transmitting unit 110 has a function of generating a signal to be transmitted to the terminal 20 and transmitting the signal wirelessly. In addition, the transmitting unit 110 transmits a message between network nodes to another network node. The receiving unit 120 has a function of receiving various signals transmitted from the terminal 20 and acquiring, for example, information of higher layers from the received signals. In addition, the transmitting unit 110 has a function of transmitting NR-PSS, NR-SSS, NR-PBCH, a DL/UL control signal, and the like to the terminal 20. In addition, the receiving unit 120 receives a message between network nodes from another network node.

The setting unit 130 stores pre-configured setup information and various kinds of setup information to be transmitted to the terminal 20. The content of the setup information is, for example, information related to transmission/reception settings according to the UE capability of the terminal 20.

As described, the control unit 140 performs control related to the processing of the UE capability report regarding the radio parameter received from the terminal 20. In addition, the control unit 140 controls communication with the terminal 20 based on the UE capability report regarding the radio parameter received from the terminal 20. A functional unit related to signal transmission in the control unit 140 may be included in the transmitting unit 110, and a functional unit related to signal reception in the control unit 140 may be included in the receiving unit 120.

### <Terminal 20>

Fig. 9 is a diagram illustrating an example of the functional configuration of the terminal 20.

As illustrated in Fig. 9, the terminal 20 includes a transmitting unit 210, a receiving unit 220, a setting unit 230, and a control unit 240. The functional configuration illustrated in Fig. 9 is merely an example. As long as the operation can be performed, any functional division and any name of each functional unit may be applied.

The transmitting unit 210 generates a transmission signal from transmission data, and transmits the transmission signal wirelessly. The receiving unit 220 wirelessly receives various signals, and acquires a higher-layer signal from the received physical layer signal. In addition, the receiving unit 220 has a function of receiving NR-PSS, NR-SSS, NR-PBCH, a DL/UL/SL control signal, and the like transmitted from the base station 10. In addition, for example, the transmitting unit 210 transmits PSCCH (Physical Sidelink Control Channel), PSSCH (Physical Sidelink Shared Channel), PSDCH (Physical Sidelink Discovery Channel), PSBCH (Physical Sidelink Broadcast Channel), and the like to another terminal 20 as D2D communication, and the receiving unit 220 receives the PSCCH, the PSSCH, the PSDCH, the PSBCH, and the like from another terminal 20.

The setting unit 230 stores various kinds of setup information received from the base station 10 by the receiving unit 220. In addition, the setting unit 230 stores the pre-configured setup information. The content of the setup information is, for example, information related to transmission/reception settings according to the UE capability.

As described, the control unit 240 performs control related to the UE capability report regarding the radio parameter of the terminal 20. A functional unit related to signal transmission in the control unit 240 may be included in the transmitting unit 210, and a functional unit related to signal reception in the control unit 240 may be included in the receiving unit 220.

### (Hardware configuration)

The block diagrams (Figs. 8 and 9) used in the description of the above illustrate blocks in functional units. These functional blocks (configuration units) are realized by any combination of at least one of hardware and software. In addition, a method of realizing each functional block is not particularly limited. That is, each functional block may be realized using one physically or logically coupled device, or may be realized by connecting two or more physically or logically separated devices directly or indirectly (for example, using a wired or radio connection) and using the plurality of devices. Each functional block may be realized by combining the above-described one device or the above-described plurality of devices with software.

Functions include determining, judging, calculating, computing, processing, deriving, investigating, searching, ascertaining, receiving, transmitting, outputting, accessing, resolving, selecting, choosing, establishing, comparing, assuming, expecting, regarding, broadcasting, notifying, communicating, forwarding, configuring, reconfiguring, allocating, mapping, assigning, and the like, but are not limited thereto. For example, a functional block (configuration unit) that makes the transmission work is called a transmitting unit or a transmitter. In any case, as described above, the realization method is not particularly limited.

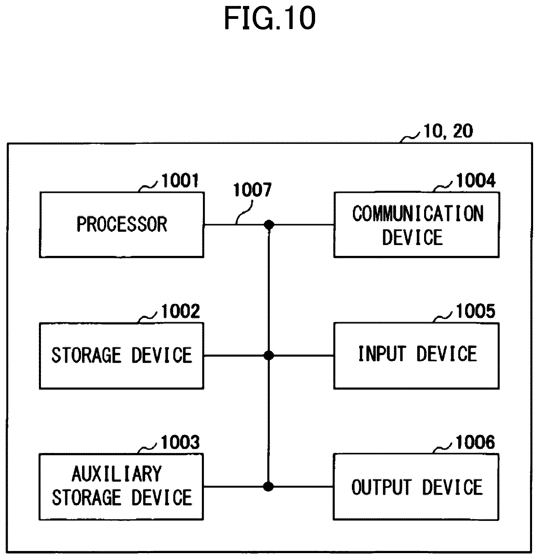

For example, the base station 10, the terminal 20, and the like according to the present disclosure may function as a computer that performs processing of the radio communication method according to the present disclosure. Fig. 10 is a diagram illustrating an example of the hardware configuration of the base station 10 and the terminal 20 according to the present disclosure. Each of the base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

In addition, in the following description, the term "device" can be read as a circuit, a unit, and the like. The hardware configuration of each of the base station 10 and the terminal 20 may be configured to include one or more devices for each of the devices illustrated in the diagram, or may be configured not to include some devices.

Each function in the base station 10 and the terminal 20 is realized by reading predetermined software (program) onto hardware, such as the processor 1001 and the storage device 1002, so that the processor 1001 performs an operation and controlling communication by the communication device 1004 or controlling at least one of reading and writing of data in the storage device 1002 and the auxiliary storage device 1003.

The processor 1001 controls the entire computer by operating an operating system, for example. The processor 1001 may be configured by a central processing unit (CPU) including an interface with peripheral equipment, a control device, an operation device, a register, and the like. For example, the control unit 140, the control unit 240, and the like described above may be realized by the processor 1001.

In addition, the processor 1001 reads a program (program code), a software module, data, and the like into the storage device 1002 from at least one of the auxiliary storage device 1003 and the communication device 1004, and executes various kinds of processing according to these. As the program, a program causing a computer to execute at least a part of the operation described in the above is used. For example, the control unit 140 of the base station 10 illustrated in Fig. 8 may be realized by a control program that is stored in the storage device 1002 and operated by the processor 1001. In addition, for example, the control unit 240 of the terminal 20 illustrated in Fig. 9 may be realized by a control program that is stored in the storage device 1002 and operated by the processor 1001. Although it has been described that the various kinds of processing described above are executed by one processor 1001, the various kinds of processing described above may be executed simultaneously or sequentially by two or more processors 1001. The processor 1001 may be implemented by one or more chips. In addition, the program may be transmitted from a network through a telecommunication line.

The storage device 1002 is a computer-readable recording medium, and may be configured by at least one of, for example, a ROM (Read Only Memory), an EPROM (Erasable Programmable ROM), an EEPROM (Electrically Erasable Programmable ROM), and a RAM (Random Access Memory). The storage device 1002 may be called a register, a cache, a main memory, and the like. The storage device 1002 can store a program (program code), a software module, and the like that can be executed to execute the communication method according to the present disclosure.

The auxiliary storage device 1003 is a computer-readable recording medium, and may be configured by at least one of, for example, an optical disk such as a CD-ROM (Compact Disc ROM), a hard disk drive, a flexible disk, and a magneto-optical disk (for example, a compact disk, a digital versatile disk, and a Blu-ray (Registered trademark) disk), a smart card, a flash memory (for example, a card, a stick, a key drive), a floppy (registered trademark) disk, and a magnetic strip. The storage medium described above may be, for example, a database including at least one of the storage device 1002 and the auxiliary storage device 1003, a server, or other appropriate media.

The communication device 1004 is hardware (transmitting and receiving device) for performing communication between computers through at least one of a wired network and a radio network, and is also referred to as, for example, a network device, a network controller, a network card, and a communication module. The communication device 1004 may be configured to include, for example, a high-frequency switch, a duplexer, a filter, a frequency synthesizer, and the like in order to realize at least one of frequency division duplex (FDD) and time division duplex (TDD), for example. For example, a transmitting and receiving antenna, an amplifier unit, a transmitting and receiving unit, a transmission line interface, and the like may be realized by the communication device 1004. The transmitting and receiving unit may be implemented so as to be physically or logically separated from the transmitting unit and the receiving unit.

The input device 1005 is an input device (for example, a keyboard, a mouse, a microphone, a switch, a button, and a sensor) for receiving an input from the outside. The output device 1006 is an output device (for example, a display, a speaker, and an LED lamp) that performs output to the outside. In addition, the input device 1005 and the output device 1006 may be integrated (for example, a touch panel).

In addition, respective devices, such as the processor 1001 and the storage device 1002, are connected to each other by the bus 1007 for communicating information. The bus 1007 may be configured using a single bus, or may be configured using a different bus for each device.

In addition, each of the base station 10 and the terminal 20 may be configured to include hardware, such as a microprocessor, a digital signal processor (DSP), an ASIC (Application Specific Integrated Circuit), a PLD (Programmable Logic Device), and an FPGA (Field Programmable Gate Array), and some or all of the functional blocks may be realized by the hardware. For example, the processor 1001 may be implemented using at least one of these hardware components.

As described above, there is provided a terminal including: a receiving unit that receives a message requesting a report of a terminal capability, from a base station; a control unit that includes, in a message reporting the terminal capability, a terminal capability related to measurement using a reference signal for acquiring information regarding a channel state, for each of band combinations that are selected from a plurality of bands that are terminal capability report targets included in the message requesting the report of the terminal capability; and a transmitting unit that transmits the message reporting the terminal capability to the base station. A range of a target time domain is specified for the terminal capability related to the measurement.

With the above configuration, the terminal 20 can report the number of CSI reports, the number of CSI-RSs, the number of ports of CSI-RS, or the number of SRSs associated with the CSI-RS, which is supported for each band combination, to the base station 10 by clarifying the target time domain. That is, it is possible to clarify the target range of the report regarding the terminal capability in the radio communication system.

The terminal capability related to the measurement may include at least one of: the number of reports of the information regarding the channel state; the number of reference signals for acquiring the information regarding the channel state; the number of ports of reference signals for acquiring the information regarding the channel state; and the number of SRSs (Sounding Reference Signals) associated with the reference signals for acquiring the information regarding the channel state. With this configuration, the terminal 20 can report the number of CSI reports, the number of CSI-RSs, the number of ports of CSI-RS, or the number of SRSs associated with the CSI-RS, which is supported for each band combination, to the base station 10 by clarifying the target time domain.

The range of the time domain may be specified by the same symbol in the same slot across all carriers in the band combinations. With this configuration, the terminal 20 can report the number of CSI reports, the number of CSI-RSs, the number of ports of CSI-RS, or the number of SRSs associated with the CSI-RS, which is supported for each band combination, to the base station 10 by clarifying the target time domain.

The range of the time domain may be specified by the same symbol or different symbols in the same slot across all carriers in the band combinations. With this configuration, the terminal 20 can report the number of CSI reports, the number of CSI-RSs, the number of ports of CSI-RS, or the number of SRSs associated with the CSI-RS, which is supported for each band combination, to the base station 10 by clarifying the target time domain.

The range of the time domain may be specified by the same symbol or different symbols in different slots across all carriers in the band combinations. With this configuration, the terminal 20 can report the number of CSI reports, the number of CSI-RSs, the number of ports of CSI-RS, or the number of SRSs associated with the CSI-RS, which is supported for each band combination, to the base station 10 by clarifying the target time domain.

In addition, there is provided a communication method causing a terminal to execute: receiving a message requesting a report of a terminal capability, from a base station; including, in a message reporting the terminal capability, a terminal capability that is related to measurement using a reference signal for acquiring information regarding a channel state, for each of band combinations that are selected from a plurality of bands that are terminal capability report targets included in the message requesting the report of the terminal capability; and transmitting the message reporting the terminal capability to the base station. A range of a target time domain is specified for the terminal capability related to the measurement.

With the above configuration, the terminal 20 can report the number of CSI reports, the number of CSI-RSs, the number of ports of CSI-RS, or the number of SRSs associated with the CSI-RS, which is supported for each band combination, to the base station 10 by clarifying the target time domain. That is, it is possible to clarify the target range of the report regarding the terminal capability in the radio communication system.

Although the base station 10 and the terminal 20 have been described using functional block diagrams for convenience of description of the processing, such equipment may be realized by hardware, software, or a combination thereof. The software operated by the processor of the base station 10 and the software operated by the processor of the terminal 20 may be stored in a random access memory (RAM), a flash memory, a read only memory (ROM), an EPROM, an EEPROM, a register, a hard disk (HDD), a removable disk, a CD-ROM, a database, a server, or any other appropriate storage media.

In addition, the notification of information is not limited to the aspect described in the present disclosure, and may be performed using other methods. For example, the notification of information may be performed using physical layer signaling (for example, DCI (Downlink Control Information), UCI (Uplink Control Information)), higher layer signaling (for example, RRC (Radio Resource Control) signaling, MAC (Medium Access Control) signaling, broadcast information (MIB (Master Information Block), SIB (System Information Block))), other signals, or a combination thereof. In addition, the RRC signaling may be called an RRC message, and may be, for example, an RRC connection setup message or an RRC connection reconfiguration message.

Each aspect described in the present disclosure may be applied to at least one of systems, which use LTE (Long Term Evolution), LTE-A (LTE-Advanced), SUPER 3G, IMT-Advanced, 4G (4th generation mobile communication system), 5G (5th generation mobile communication system), FRA (Future Radio Access), and NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and next-generation systems extended based on these. In addition, a plurality of systems may be combined (for example, a combination of 5G and at least one of LTE and LTE-A) to be applied.

In the processing procedure, sequence, flowchart, and the like in each aspect described in this specification, the order may be changed as long as there is no contradiction. For example, for the methods described in the present disclosure, elements of various steps are presented using an exemplary order.

The specific operation described as being performed by the base station 10 in this specification may be performed by its upper node in some cases. In a network including one or more network nodes each having the base station 10, it is obvious that various operations performed for communication with the terminal 20 can be performed by at least one of the base station 10 and other network nodes (for example, MME, S-GW, and the like can be considered, but the network node is not limited thereto) other than the base station 10. Although a case where the number of other network nodes other than the base station 10 is one has been exemplified above, the other network nodes may be a combination (for example, MME and S-GW) of a plurality of other network nodes.

Information or signals described in the present disclosure can be output from a higher layer (or a lower layer) to a lower layer (or a higher layer). Information or signals described in the present disclosure may be input and output through a plurality of network nodes.

Information or the like that is input and output may be stored in a specific place (for example, a memory) or may be managed using a management table. The information or the like that is input and output can be overwritten, updated, or added. The information or the like that is output may be deleted. The information or the like that is input may be transmitted to another device.

The judging in the present disclosure may be performed based on a value expressed by 1 bit (0 or 1), may be performed based on Boolean (true or false), or may be performed by numerical value comparison (for example, comparison with a predetermined value).

Software, regardless of whether this is called software, firmware, middleware, microcode, a hardware description language, or any other name, should be interpreted broadly to mean instructions, instruction sets, codes, code segments, program codes, programs, subprograms, software modules, applications, software applications, software packages, routines, subroutines, objects, executable files, execution threads, procedures, functions, and the like.

In addition, software, instructions, information, and the like may be transmitted and received through a transmission medium. For example, in a case where software is transmitted from a website, a server, or other remote sources using at least one of the wired technology (coaxial cable, optical fiber cable, twisted pair, digital subscriber line (DSL), and the like) and the radio technology (infrared, microwave, and the like), at least one of the wired technology and the radio technology is included within the definition of the transmission medium.

The information, signals, and the like described in the present disclosure may be expressed using any of a variety of different technologies. For example, data, instructions, commands, information, signals, bits, symbols, and chips that can be referred to throughout the above description may be represented by voltage, current, electromagnetic waves, magnetic field or magnetic particles, light field or photon, or any combination thereof.

In addition, the terms described in the present disclosure and the terms necessary for understanding the present disclosure may be replaced with terms having the same or similar meaning. For example, at least one of the channel and the symbol may be a signal (signaling). In addition, the signal may be a message. In addition, a component carrier (CC) may be called a carrier frequency, a cell, a frequency carrier, or the like.

The terms "system" and "network" used in the present disclosure are used interchangeably.

In addition, the information, parameters, and the like described in the present disclosure may be expressed using an absolute value, may be expressed using a relative value from a predetermined value, or may be expressed using another corresponding information. For example, the radio resource may be indicated by an index.

The names used for the parameters described above are not limiting names in any way. In addition, equations and the like using these parameters may be different from those explicitly disclosed in the present disclosure. Since various channels (for example, a PUCCH and a PDCCH) and information elements can be identified by any suitable names, various names allocated to these various channels and information elements are not limiting names in any way.

In the present disclosure, terms such as "base station (BS)", "radio base station", "base station equipment", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station may also be referred to as terms, such as a macro cell, a small cell, a femto cell, and a pico cell.

The base station can include one or more (for example, three) cells. When the base station includes a plurality of cells, the entire coverage area of the base station can be divided into a plurality of smaller areas, and each of the smaller area can also provide a communication service using a base station subsystem (for example, a remote radio head (RRH)). The term "cell" or "sector" refers to a part or the entirety of the coverage area of at least one of a base station and a base station subsystem that provides communication services in this coverage.

In the present disclosure, terms such as "mobile station (MS)", "user terminal", "user equipment (UE)", and "terminal" can be used interchangeably.

The mobile station may also be called a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms depending on those skilled in the art.

At least one of the base station and the mobile station may be called a transmitting device, a receiving device, a communication device, and the like. In addition, at least one of the base station and the mobile station may be a device mounted on a moving body, the moving body itself, and the like. The moving body may be a vehicle (for example, a car or an airplane), an unmanned moving body (for example, a drone or a self-driving car), or a robot (maned or unmanned). In addition, at least one of the base station and the mobile station necessarily includes a device that does not move during a communication operation. For example, at least one of the base station and the mobile station may be an IoT (Internet of Things) device, such as a sensor.

In addition, the base station in the present disclosure may be read as a user terminal. For example, each aspect of the present disclosure may be applied to a configuration in which communication between a base station and a user terminal is replaced with communication between a plurality of terminals 20 (which may be called, for example, D2D (Device-to-Device) or V2X (Vehicle-to-Everything)). In this case, the terminal 20 may have the above-described function of the base station 10. In addition, terms such as "uplink" and "downlink" may be read as terms corresponding to terminal-to-terminal communication (for example, "side"). For example, an uplink channel, a downlink channel, and the like may be read as a side channel.

Similarly, the user terminal in the present disclosure may be read as a base station. In this case, the base station may have the above-described function of the user terminal.

The terms "determining" used in the present disclosure may involve a wide variety of operations. For example, "determining" can include considering judging, calculating, computing, processing, deriving, investigating, looking up (search, inquiry) (for example, looking up in a table, database, or another data structure), and ascertaining as "determining". In addition, "determining" can include considering receiving (for example, receiving information), transmitting (for example, transmitting information), input, output, accessing (for example, accessing data in a memory) as "determining". In addition, "determining" can include considering resolving, selecting, choosing, establishing, comparing, and the like as "determining". In other words, "determining" can include considering any operation as "determining". In addition, "determining" may be read as "assuming", "expecting", "considering", and the like.

The terms "connected" and "coupled" or variations thereof mean any direct or indirect connection or coupling between two or more elements, and can include a case where one or more intermediate elements are present between two elements "connected" or "coupled" to each other. The coupling or connection between elements may be physical, logical, or a combination thereof. For example, "connection" may be read as "access". When used in the present disclosure, two elements can be considered to be "connected" or "coupled" to each other using at least one of one or more wires, cables, and printed electrical connections and using some non-limiting and non-inclusive examples, such as electromagnetic energy having wavelengths in a radio frequency domain, a microwave domain, and a light (both visible and invisible) domain.

The reference signal may be abbreviated as RS (Reference Signal), and may be called Pilot according to the applied standard.

The description "based on" used in the present disclosure does not mean "based only on" unless otherwise specified. In other words, the description "based on" means both "based only on" and "based at least on".

Any reference to elements using designations such as "first" and "second" used in the present disclosure does not generally limit the quantity or order of the elements. These designations can be used in the present disclosure as a convenient method for distinguishing between two or more elements. Therefore, references to first and second elements do not mean that only two elements can be adopted or that the first element should precede the second element in any way.

"Means" in the configuration of each device described above may be replaced with "unit", "circuit", "device", and the like.

When "include", "including", and variations thereof are used in the present disclosure, these terms are intended to be inclusive similarly to the term "comprising". In addition, the term "or" used in the present disclosure is intended not to be an exclusive-OR.

A radio frame may be configured by one or more frames in the time domain. Each of one or more frames in the time domain may be referred to as a subframe. In addition, the subframe may be configured by one or more slots in the time domain. The subframe may be a fixed time length (for example, 1 ms) that does not depend on numerology.

Numerology may be a communication parameter applied to at least one of transmission and reception of a given signal or channel. Numerology may indicate at least one of, for example, subcarrier spacing (SCS), bandwidth, symbol length, cyclic prefix length, transmission time interval (TTI), the number of symbols per TTI, radio frame configuration, specific filtering processing performed in the frequency domain by the transceiver, and specific windowing processing performed in the time domain by the transceiver.

A slot may be configured by one or more symbols (OFDM (Orthogonal Frequency Division Multiplexing) symbol, SC-FDMA (Single Carrier Frequency Division Multiple Access) symbol, and the like) in the time domain. A slot may be a time unit based on numerology.

A slot may include multiple mini-slots. Each mini-slot may be configured by one or more symbols in the time domain. In addition, the mini-slot may be called a subslot. A mini-slot may be configured by a smaller number of symbols than that in a slot. A PDSCH (or a PUSCH) transmitted in time units larger than the mini-slot may be referred to as PDSCH (or PUSCH) mapping type A. A PDSCH (or a PUSCH) transmitted using a mini-slot may be referred to as PDSCH (or PUSCH) mapping type B.

Each of the radio frame, the subframe, the slot, the mini-slot, and the symbol indicates a time unit when transmitting a signal. The radio frame, the subframe, the slot, the mini-slot, and the symbol may have different names corresponding thereto.

For example, one subframe may be called a transmission time interval (TTI), a plurality of consecutive subframes may be called a TTI, and one slot or one mini-slot may be called a TTI. That is, at least one of the subframe and the TTI may be a subframe (1 ms) in the existing LTE, a period (for example, 1 to 13 symbols) shorter than 1 ms, or a period longer than 1 ms. In addition, the unit indicating the TTI may be called a slot, a mini-slot, or the like, instead of a subframe.

Here, the TTI refers to, for example, a minimum time unit of scheduling in radio communication. For example, in the LTE system, the base station performs scheduling for allocating radio resources (frequency bandwidth, transmission power, and the like that can be used in each terminal 20) to each terminal 20 in TTI units. In addition, the definition of the TTI is not limited to this.

The TTI may be a transmission time unit, such as a channel-encoded data packet (transport block), a code block, and a code word, or may be a processing unit, such as scheduling and link adaptation. In addition, when a TTI is given, a time section (for example, the number of symbols) in which a transport block, a code block, a code word, and the like are actually mapped may be shorter than the TTI.

In addition, when one slot or one mini-slot is called a TTI, one or more TTIs (that is, one or more slots or one or more mini-slots) may be a minimum time unit for scheduling. In addition, the number of slots (the number of mini-slots) configuring the minimum time unit of the scheduling may be controlled.

A TTI having a time length of 1 ms may be called a normal TTI (TTI in LTE Rel. 8-12), a long TTI, a normal subframe, a long subframe, a slot, and the like. A TTI shorter than the normal TTI may be called a shortened TTI, a short TTI, a partial or fractional TTI, a shortened subframe, a short subframe, a mini-slot, a subslot, a slot, and the like.

In addition, a long TTI (for example, a normal TTI or a subframe) may be read as a TTI having a time length exceeding 1 ms, and a short TTI (for example, a shortened TTI) may be read as a TTI shorter than the TTI length of the long TTI and equal to or longer than 1 ms.

A resource block (RB) is a resource allocation unit in the time domain and the frequency domain, and may include one or more consecutive subcarriers in the frequency domain. The number of subcarriers included in the RB may be the same regardless of numerology, and may be, for example, 12. The number of subcarriers included in the RB may be determined based on numerology.

In addition, the time domain of the RB may include one or more symbols, and may be the length of one slot, one mini-slot, one subframe, or one TTI. One TTI, one subframe, and the like may each be configured by one or more resource blocks.

In addition, one or more RBs may be called a physical resource block (PRB: Physical RB), a sub-carrier group (SCG), a resource element group (REG), a PRB pair, an RB pair, and the like.

In addition, the resource block may be configured by one or more resource elements (REs). For example, one RE may be a radio resource area of one subcarrier and one symbol.

A bandwidth part (BWP) (which may be called a partial bandwidth or the like) may indicate a subset of consecutive common resource blocks (RBs) for given numerology in a given carrier. Here, the common RB may be specified by an index of the RB with the common reference point of the carrier as a reference. The PRB may be defined by a given BWP and numbered within the BWP.

The BWP may include a BWP for UL (UL BWP) and a BWP for DL (DL BWP). For the UE, one or more BWPs may be set in one carrier.

At least one of the set BWPs may be active, and it may not be assumed that the UE transmits and receives a predetermined signal/channel outside the active BWP. In addition, "cell", "carrier", and the like in the present disclosure may be read as "BWP".

The structures of the radio frame, the subframe, the slot, the mini-slot, and the symbol described above are merely examples. For example, the number of subframes included in a radio frame, the number of slots per subframe or radio frame, the number of mini-slots included in a slot, the number of symbols and RBs included in a slot or mini-slot, the number of subcarriers included in an RB, the number of symbols in the TTI, the symbol length, the cyclic prefix (CP) length, and the like can be changed in various ways.

In the present disclosure, in a case where articles, for example, a, an, and the in English, are added by translation, the present disclosure may include that nouns subsequent to these articles are plural.

In the present disclosure, the expression "A and B are different" may mean "A and B are different from each other". In addition, the expression may mean that "A and B each are different from C". Terms such as "separate", "coupled" may be interpreted similarly to "different".

Each aspect described in the present disclosure may be used alone, may be used in combination, or may be switched and used according to execution. In addition, the notification of predetermined information (for example, notification of "X") is not limited to being explicitly performed, and may be performed implicitly (for example, without the notification of the predetermined information).

In addition, in the present disclosure, the UE capability is an example of the terminal capability. The "UECapabilityEnquiry" is an example of a message making a request for the report of the terminal capability. The "UECapabilityInformation" is an example of a message that reports the terminal capability. The CSI-RS is an example of a reference signal for acquiring information regarding the channel state.

### EXPLANATIONS OF LETTERS OR NUMERALS

- 10: BASE STATION
- 110: TRANSMITTING UNIT
- 120: RECEIVING UNIT
- 130: SETTING UNIT
- 140: CONTROL UNIT
- 20: TERMINAL
- 210: TRANSMITTING UNIT
- 220: RECEIVING UNIT
- 230: SETTING UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A terminal (20), comprising:
a receiving unit (220) configured to receive a message requesting a report of a terminal capability, from a base station (10);
a control unit (240) configured to include, in a message reporting the terminal capability, a terminal capability that is related to measurement using a reference signal for acquiring a channel state, for each of band combinations that are selected from a plurality of bands that are report targets included in the message requesting the report of the terminal capability; and
a transmitting unit (210) configured to transmit the message reporting the terminal capability to the base station,
wherein a range of a target time domain is specified for the terminal capability related to the measurement, and
wherein the control unit (240) is configured to include, in the message reporting the terminal capability, the terminal capability that is related to the measurement by including the terminal capability that is related to the measurement in CA-ParametersNR, including the CA-ParametersNR in BandCombinationList, including the BandCombinationList in RF-Parameters, and including the RF-Parameters in UE-NR-Capability.

2. The terminal (20) according to claim 1,
wherein the terminal capability related to the measurement indicates a number of ports of reference signals for acquiring information regarding the channel state.

3. A base station (10) comprising:
a transmitting unit (110) configured to transmit a message requesting a report of a terminal capability, to a terminal (20); and
a receiving unit (140) configured to receive a message reporting the terminal capability including a terminal capability related to measurement using a reference signal for acquiring a channel state, for each of band combinations that are selected from a plurality of bands that are report targets included in the message requesting the report of the terminal capability,
wherein a range of a target time domain is specified for the terminal capability related to the measurement;
wherein the terminal capability that is related to the measurement is included in CA-ParametersNR, the CA-ParametersNR is included in BandCombinationList, the BandCombinationList is included in RF-Parameters, and the RF-Parameters are included in UE-NR-Capability.

4. A communication method causing a terminal (20) to execute:
receiving a message requesting a report of a terminal capability, from a base station (10);
including, in a message reporting the terminal capability, a terminal capability that is related to measurement using a reference signal for acquiring a channel state, for each of band combinations that are selected from a plurality of bands that are report targets included in the message requesting the report of the terminal capability; and
transmitting the message reporting the terminal capability to the base station (10),
wherein a range of a target time domain is specified for the terminal capability related to the measurement,
wherein the including includes, in the message reporting the terminal capability, the terminal capability that is related to the measurement by including the terminal capability that is related to the measurement in CA-ParametersNR, including the CA-ParametersNR in BandCombinationList, including the BandCombinationList in RF-Parameters, and including the RF-Parameters in UE-NR-Capability.

## Patentansprüche

1. Endgerät (20), umfassend:
eine Empfangseinheit (220), die so konfiguriert ist, dass sie eine Nachricht von einer Basisstation (10) empfängt, die eine Meldung über eine Endgerätefähigkeit anfordert;
eine Steuerungseinheit (240), die so konfiguriert ist, dass sie in einer Nachricht, die die Endgerätefähigkeit meldet, eine Endgerätefähigkeit einschließt, die sich auf die Messung unter Verwendung eines Referenzsignals zum Erfassen eines Kanalzustands für jede von Bandkombinationen bezieht, die aus einer Vielzahl von Bändern ausgewählt werden, die Meldungsziele sind, die in der Meldung eingeschlossen sind, die die Nachricht der Endgerätefähigkeit anfordert; und
eine Sendeeinheit (210), die so konfiguriert ist, dass sie die Nachricht, die die Endgerätefähigkeit an die Basisstation meldet, sendet,
wobei ein Bereich einer Zielzeitdomäne für die Endgerätefähigkeit im Zusammenhang mit der Messung spezifiziert wird und
wobei die Steuerungseinheit (240) so konfiguriert ist, dass sie in der Nachricht, die die Endgerätefähigkeit meldet, die Endgerätefähigkeit einschließt, die mit der Messung in Zusammenhang steht, durch Einschließen der Endgerätefähigkeit, die mit der Messung in Zusammenhang steht, in CA-ParametersNR, Einschließen der CA-ParametersNR in BandCombinationList, Einschließen der BandCombinationList in RF-Parameter, und Einschließen der RF-Parameter in UE-NR-Capability.

2. Endgerät (20) nach Anspruch 1,
wobei die Endgerätefähigkeit im Zusammenhang mit der Messung eine Anzahl von Referenzsignalanschlüssen zur Erfassung von Informationen über den Kanalzustand angibt.

3. Basisstation (10), umfassend:
eine Sendeeinheit (110), die so konfiguriert ist, dass sie eine Nachricht, die eine Meldung über eine Endgerätefähigkeit anfordert, an ein Endgerät (20) sendet; und
eine Empfangseinheit (140), die so konfiguriert ist, dass sie eine Nachricht empfängt, die die Endgerätefähigkeit einschließlich einer Endgerätefähigkeit im Zusammenhang mit der Messung unter Verwendung eines Referenzsignals zur Erfassung eines Kanalzustands für jede der Bandkombinationen meldet, die aus einer Vielzahl von Bändern ausgewählt werden, die Meldeziele sind, die in der Nachricht eingeschlossen sind, die die Meldung über die Endgerätefähigkeit anfordert,
wobei ein Bereich einer Zielzeitdomäne für die Endgerätefähigkeit im Zusammenhang mit der Messung spezifiziert wird;
wobei die Endgerätefähigkeit, die mit der Messung in Zusammenhang steht, in CA-ParametersNR eingeschlossen ist, CA-ParametersNR in BandCombinationList eingeschlossen ist, BandCombinationList in RF-Parameter eingeschlossen ist und RF-Parameter in UE-NR-Capability eingeschlossen sind.

4. Kommunikationsverfahren, das ein Endgerät (20) veranlasst, Folgendes auszuführen:
Empfangen einer Nachricht, die eine Meldung über eine Endgerätefähigkeit von einer Basisstation (10) anfordert;
einschließlich, in einer Nachricht, die die Endgerätefähigkeit meldet, einer Endgerätefähigkeit, die im Zusammenhang mit der Messung unter Verwendung eines Referenzsignals zur Erfassung eines Kanalzustands steht, für jede der Bandkombinationen, die aus einer Vielzahl von Bändern ausgewählt werden, die Meldeziele, die in der Nachricht eingeschlossen sind, in der die Meldung über die Endgerätefähigkeit angefordert wird; und
Senden der Nachricht, die die Endgerätefähigkeit an die Basisstation (10) meldet,
wobei ein Bereich einer Zielzeitdomäne für die Endgerätefähigkeit in Bezug auf die Messung spezifiziert wird,
wobei das Einschließen in der Nachricht, die die Endgerätefähigkeit meldet, die Endgerätefähigkeit einschließt, die mit der Messung in Zusammenhang steht, durch Einschließen der Endgerätefähigkeit, die mit der Messung in Zusammenhang steht, in CA-ParametersNR, Einschließen der CA-ParametersNR in BandCombinationList, Einschließen der BandCombinationList in RF-Parameter, und Einschließen der RF-Parameter in UE-NR-Capability.

## Revendications

1. Terminal (20), comprenant :
une unité de réception (220) configurée pour recevoir un message demandant un rapport d'une capacité de terminal, de la part d'une station de base (10) ;
une unité de commande (240) configurée pour inclure, dans un message rapportant la capacité de terminal, une capacité de terminal qui est relative à une mesure en utilisant un signal de référence pour acquérir un état de canal, pour chacune de combinaisons de bandes qui sont sélectionnées parmi une pluralité de bandes qui sont des cibles de rapport incluses dans le message demandant le rapport de la capacité de terminal ; et
une unité de transmission (210) configurée pour transmettre le message rapportant la capacité de terminal à la station de base,
dans lequel une plage d'un domaine temporel cible est spécifiée pour la capacité de terminal relative à la mesure, et
dans lequel l'unité de commande (240) est configurée pour inclure, dans le message rapportant la capacité de terminal, la capacité de terminal qui est relative à la mesure en incluant la capacité de terminal qui est relative à la mesure dans CA-ParametersNR, incluant la CA-ParametersNR dans BandCombinationList, incluant la BandCombinationList dans RF-Parameters, et incluant les RF-Parameters dans UE-NR-Capability.

2. Terminal (20) selon la revendication 1,
dans lequel la capacité de terminal relative à la mesure indique un nombre de ports de signaux de référence pour acquérir des informations relatives à l'état de canal.

3. Station de base (10) comprenant :
une unité de transmission (110) configurée pour transmettre un message demandant un rapport d'une capacité de terminal, à un terminal (20) ; et
une unité de réception (140) configurée pour recevoir un message rapportant la capacité de terminal incluant une capacité de terminal relative à une mesure en utilisant un signal de référence pour acquérir un état de canal, pour chacune de combinaisons de bandes qui sont sélectionnées parmi une pluralité de bandes qui sont des cibles de rapport incluses dans le message demandant le rapport de la capacité de terminal,
dans lequel une plage d'un domaine temporel cible est spécifiée pour la capacité de terminal relative à la mesure ;
dans lequel la capacité de terminal qui est relative à la mesure est incluse dans CA-ParametersNR, la CA-ParametersNR est incluse dans BandCombinationList, la BandCombinationList est incluse dans RF-Parameters, et les RF-Parameters sont inclus dans UE-NR-Capability.

4. Procédé de communication amenant un terminal (20) à mettre en oeuvre :
la réception d'un message demandant un rapport d'une capacité de terminal, de la part d'une station de base (10) ;
incluant, dans un message rapportant la capacité de terminal, une capacité de terminal qui est relative à une mesure en utilisant un signal de référence pour acquérir un état de canal, pour chacune de combinaisons de bandes qui sont sélectionnées parmi une pluralité de bandes qui sont des cibles de rapport incluses dans le message demandant le rapport de la capacité de terminal ; et
la transmission du message rapportant la capacité de terminal à la station de base (10),
dans lequel une plage d'un domaine temporel cible est spécifiée pour la capacité de terminal relative à la mesure,
dans lequel l'inclusion inclut, dans le message rapportant la capacité de terminal, la capacité de terminal qui est relative à la mesure en incluant la capacité de terminal qui est relative à la mesure dans CA-ParametersNR, incluant la CA-ParametersNR dans BandCombinationList, incluant la BandCombinationList dans RF-Parameters, et incluant les RF-Parameters dans UE-NR-Capability.
